(19) Europäisches Patentamt
European Patent Office
Office européen des brevets

(11) **EP 3 072 857 A1**

(12) **EUROPÄISCHE PATENTANMELDUNG**

(43) Veröffentlichungstag:
28.09.2016 Patentblatt 2016/39

(51) Int Cl.:
*C03C 3/083* (2006.01)   *C03C 10/00* (2006.01)
*C03C 23/00* (2006.01)   *B23K 26/00* (2014.01)

(21) Anmeldenummer: 16162174.3

(22) Anmeldetag: **24.03.2016**

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**MA MD**

(30) Priorität: **24.03.2015 DE 102015104412**

(71) Anmelder: **Schott AG**
**55122 Mainz (DE)**

(72) Erfinder:
• **Mühlke, Oliver**
**65366 Geisenheim (DE)**
• **Spier, Martin**
**55124 Mainz (DE)**

(74) Vertreter: **Blumbach Zinngrebe**
**Patentanwälte**
**Alexandrastrasse 5**
**65187 Wiesbaden (DE)**

(54) **VERFAHREN ZUR GEOMETRIEÄNDERUNG VON GLASKERAMIKEN UND VERFAHRENSGEMÄSS HERGESTELLTER BESCHICHTETER GLASKERAMIKARTIKEL**

(57) Der Erfindung liegt die Aufgabe zu Grunde, lokal eine Veränderung der Geometrie an einem monolithischen Glaskeramik-Bauteil zu erzeugen. Dazu ist ein Verfahren zur Erzeugung einer erhabenen Struktur auf einem Glaskeramikelement (1), bei welchem ein Glaselement (2) oder ein Glaskeramikelement (1) mit elektromagnetischer Strahlung in einem lokalen Bereich der Oberfläche bestrahlt wird, wobei die Strahlung das Glaselement (2) oder Glaskeramikelement (1) durchdringt und dabei zumindest teilweise absorbiert wird, so dass das Glaselement (2) oder Glaskeramikelement (1) sich im Bereich der eingestrahlten elektromagnetischen Strahlung erhitzt und über die Glasübergangstemperatur hinaus erwärmt wird, und wobei die Einstrahlung nach der Erwärmung beendet wird, so dass der erhitzte Bereich wieder auf die Temperatur des umgebenden Glas- oder Glaskeramikmaterials auskühlt, und wobei durch die Erwärmung eine Volumenänderung des Glases oder der Glaskeramik erfolgt, welche eine lokale Erhebung der Oberfläche bewirkt, und wobei dieser Zustand beim Abkühlen des erhitzten Bereichs eingefroren wird, so dass nach dem Abkühlen eine Oberflächenverformung in Form einer Erhöhung (20) bestehen bleibt, wobei im Falle eines Glaselements (2) das Glaselement (2) nach dem Erzeugen der Erhöhung (20) durch eine Temperaturbehandlung keramisiert und damit in ein Glaskeramikelement (1) umgewandelt wird.

Fig. 1

EP 3 072 857 A1

## Beschreibung

Die Erfindung betrifft ein Verfahren zur bevorzugt lokalen Änderung der Geometrie von Glaskeramiken, sowie eine Glaskeramik mit einer lokalen Geometrieänderung in Form einer Erhebung auf der Oberfläche. Die Glaskeramik kann dabei auf zumindest einer Oberfläche eine Schicht umfassen.

Dabei sind bevorzugt im sichtbaren Wellenlängenbereich (380 nm - 780 nm) eingefärbte Materialien (und damit meist auch im IR-Bereich gefärbte Materialien) wie Gläser und Glaskeramiken (Grünglaszustand oder bereits keramisiert) zu nutzen. Die Änderung der Geometrie erfolgt dabei durch die lokale und zeitlich begrenzte Einwirkung von elektromagnetischer Strahlung, wie z.B. Laserstrahlung eines Dioden-Laser mit 1 $\mu$m Wellenlänge mit CW-Mode und nicht stark fokussiertem Laserstrahl, vorzugsweise mit einem Strahldurchmesser von größer 400 $\mu$m.

## Stand der Technik

Eine lokale Veränderung der Geometrie von Bauteilen aus Glaskeramik erfolgt nach dem Stand der Technik auf drei verschiedene Varianten:

Zum Einen kann durch das Anfügen eines zweiten Teils an das eigentliche Bauteil eine geometrische Vergrößerung erzeugt werden. Dabei können alle Fügeverfahren wie Löten, Schweißen und Kleben zum Einsatz kommen. Nachteilig ist dabei, dass zwei Bauteile benötigt werden. Zudem ist die Fügestelle meist optisch störend oder bildet eine Bruchausgangskante. Auch aufwändige Geometrieerhöhungen (Kreise, Abrundungen etc.) können nur schwer durch ein zusätzliches Bauteil angefügt werden.

Zum Anderen kann eine lokale Verringerung der Geometrie durch (lokales) mechanisches Abtragen von Material erfolgen. Dabei kommen Schleif- und Fräsverfahren zum Einsatz. Die dabei auftretende Schädigung der Oberfläche kann zur Herabsetzung der mechanischen Festigkeit führen. Auch die Veränderung der Oberfläche im abgetragenen Bereich (Schleif- oder Polieroberfläche) kann optisch störend wirken. Zudem ist die Herstellung von lokal erhabenen Strukturen auf diese Weise nur schwer herstellbar, da dazu sehr viel umgebendes Material abgetragen werden müsste.

Als drittes ist in WO 2012/134818 ein Verfahren beschrieben, wonach mit einem Ultrakurzpulslaser im UV-Bereich in einem hochtransparenten Glas lokal sehr begrenzte Farbzentren erzeugt werden, die dann als selbstverstärkender Effekt an die UV-Strahlung immer besser ankoppeln und somit einen Heizeffekt erzielen, der im Endeffekt zu einer Geometrieänderung in Form von kleinen örtlich sehr begrenzten Erhebungen im Mikrometerbereich führt.

Der Nachteil hier ist der aufwändige Ultrakurzpulslaser, welcher erst die Voraussetzung schaffen muss, dass das Glas überhaupt ankoppelt. Auch der selbstverstärkende Effekt führt zu unkontrolliertem Aufheizen und zu einer nicht beherrschbaren Regelungsproblematik. Ein weiterer Nachteil liegt darin, dass nur Gläser verwendbar sind, die im UV-Bereich hinreichend transparent sind.

## Aufgabe der Erfindung:

Der Erfindung liegt daher die Aufgabe zu Grunde, lokal eine Veränderung der Geometrie an einem monolithischen Glaskeramik-Bauteil zu erzeugen. Wünschenswert wäre es ferner, wenn das Glaskeramik-Bauteil oder der erzeugte Glaskeramik-Artikel mit lokaler Veränderung der Geometrie zumindest auch teilweise eine Schicht oder eine Beschichtung, beispielsweise eine Dekorschicht, aufweisen würde.

Demnach ist es ein Ziel der Erfindung, lokale Veränderungen der Geometrie des Glaskeramik-Artikels zu erzeugen, die einer späteren Beschichtung nicht im Wege stehen. Ferner ist es ein Ziel der Erfindung, lokal eine Veränderung der Geometrie an einem monolithischen Glaskeramik-Bauteil, welches bereits zumindest zum Teil eine Schicht umfasst oder zumindest teilweise beschichtet ist, zu erzeugen.

Anfügungen oder mechanische Bearbeitungen werden dann nicht mehr benötigt, um eine haptische Erhöhung oder Einsenkung zu erzeugen, welche zusätzlich neben dem haptischen Eindruck auch noch eine bestimmte visuelle Wahrnehmung ermöglicht.

Damit ist es möglich, geometrische Abgrenzungen auf Bauteilen jeglicher Art aus Glaskeramik fühlbar zu machen.

Die Nachteile einer Fügenaht, nämlich das optische Erscheinungsbild und das Vorhandensein einer oder mehrerer zusätzlicher Bauteilkanten, die zum Bruch führen können, entfällt.

Die Erfindung ermöglicht es insbesondere,

- eine Veränderung der Geometrie ohne Schädigung der Oberfläche herzustellen,

- eine lokale, bevorzugt punkt- oder linienförmige Erhebung herzustellen,
- haptische Strukturen auf Glaskeramikbauteilen herzustellen, ohne dabei die Bedruckungsmöglichkeiten wesentlich einzuschränken.

**Lösung der Aufgabe**

Um eine Geometrieänderung einer Glaskeramik zu erzielen, wird erfindungsgemäß eine Temperaturerhöhung der Glaskeramik, die in der Regel über der Glasübergangstemperatur Tg liegt, und im Anschluss eine gezielte, im Allgemeinen sehr schnelle, Abkühlung durchgeführt. Die Glaskeramik kann nach der Geometrieänderung auf der Oberfläche zumindest teilweise mit einer Schicht beaufschlagt werden, oder bereits vor der Geometrieänderung auf der Oberfläche zumindest teilweise eine Schicht oder Beschichtung umfassen.

Dabei wird nicht nur die Oberfläche, sondern das Volumen des Materials aufgeheizt, um den Effekt sichtbar zu machen und die Oberfläche nicht zu überhitzen. Um eine lokale Geometrieänderung zu erzielen, wird also dazu auch lokal im Volumen eine Temperaturerhöhung erzielt.

Dies kann durch elektromagnetische Strahlung in einem Wellenlängenbereich erfolgen in welchem das Glas oder die Glaskeramik zumindest eine Teildurchlässigkeit für die auftreffende elektromagnetische Strahlung hat.

Damit wird nicht nur oberflächlich, sondern über einen Teil oder die gesamte Dicke (im Volumen) Energie eingebracht, so dass sich ein homogener Effekt ergibt, der im Idealfall außerhalb der lokalen Geometrieänderung keinen Einfluss auf die Geometrie des Bauteils hat.

Ist das Produkt aus Strahlungsdichte und Absorption hoch genug, dann kommt es zu einer lokalen schockartigen Temperaturerhöhung und damit zu einer Veränderung des Volumens.

Im Speziellen ist erfindungsgemäß also ein Verfahren zur Erzeugung einer erhabenen Struktur auf einem Glaskeramikelement vorgesehen, bei welchem ein Glaselement oder ein Glaskeramikelement mit elektromagnetischer Strahlung in einem lokalen Bereich der Oberfläche bestrahlt wird, wobei die Strahlung das Glaselement oder Glaskeramikelement durchdringt und dabei zumindest teilweise absorbiert wird, so dass das Glaskeramikelement sich im Bereich der eingestrahlten elektromagnetischen Strahlung erhitzt und über die Glasübergangstemperatur der Restglasphase hinaus erwärmt wird, und wobei die Einstrahlung nach der Erwärmung beendet wird, so dass der erhitzte Bereich wieder auf die Temperatur des umgebenden Glas- oder Glaskeramikmaterials auskühlt, und wobei durch die Erwärmung eine Volumenänderung des Glases oder der Glaskeramik erfolgt, welche eine lokale Erhebung der Oberfläche bewirkt, und wobei dieser Zustand beim Abkühlen des erhitzten Bereichs eingefroren wird, so dass nach dem Abkühlen eine Oberflächenverformung in Form einer Erhöhung bestehen bleibt. Überraschend ist eine solche Volumenänderung bei einer Glaskeramik, die einen sehr niedrigen oder sogar verschwindenden Temperaturausdehnungskoeffizienten $\alpha_{20-600}$ aufweist, mit dem Verfahren in einfacher Weise herbeizuführen. Typischerweise liegt der Temperaturausdehnungskoeffizient $\alpha_{20-600}$ einer solchen Glaskeramik bei höchstens $2 \cdot 10^{-6}$ $K^{-1}$. Im Falle eines Glaselements wird dieses nach dem Erzeugen der Erhöhung durch eine Temperaturbehandlung keramisiert und damit in ein Glaskeramikelement umgewandelt. Demgemäß wird für das Glaselement auch ein sogenanntes Grünglas verwendet, welches eine Zusammensetzung aufweist, die eine Umwandlung in eine Glaskeramik ermöglicht. Besonders geeignet hierfür sind Lithium- und Magnesium-Aluminosilikatgläser.

Mit diesem Verfahren ist ein Glaskeramikartikel herstellbar, bei welchem in der Oberfläche zumindest eine lokale Erhebung vorhanden ist, wobei die kleinste laterale Abmessung eine Länge von zumindest 0,05 mm aufweist, und wobei die lokale Erhebung eine Höhe im Bereich von 0,5% bis 20% der Glasdicke aufweist, wobei die Erhebung und das umgebende Glaskeramikmaterial monolithisch sind und die gleiche Zusammensetzung aufweisen, und wobei das Glaskeramikmaterial unter der Erhebung gemäß einer Weiterbildung der Erfindung eine geringere Dichte aufweist, als das die Erhebung umgebende Material. Die lokale Erhebung kann 0,005 bis 0,5 Millimetern betragen. Das Verfahren kann nicht nur auf Glaskeramiken, sondern auch auf Gläser angewendet werden, wobei damit entsprechende Glasprodukte erhalten werden. Wird eine lokale Erhöhung zunächst in ein Glaselement eingefügt, welches danach keramisiert wird, können sich Dichteunterschiede während der Keramisierung ausgleichen, so dass der vorgenannte Dichteunterschied kein zwingendes Merkmal ist.

Überraschend hat sich gezeigt, dass das Glas oder das Glaskeramikmaterial bereits vor der Erzeugung der Erhöhung auch eine Schicht oder eine Beschichtung umfassen kann. Das Glaskeramikmaterial kann beispielsweise, zumindest teilweise, eine Dekorschicht umfassen. Diese kann etwa auf einer Oberfläche des Glases oder des Glaskeramikmaterials, vorzugsweise auf der Nutzseite, vorgesehen sein, um neben dem haptisch wahrnehmbaren Eindruck, welcher durch die lokale Veränderung der Geometrie erzeugt wird, zusätzlich auch einen visuell wahrnehmbaren Eindruck zu erzeugen. Dabei können das Glas oder der Glaskeramikartikel bereits vor der lokalen Veränderung der Geometrie, zumindest teilweise, die Schicht umfassen.

Eine derartige Schicht kann vorzugsweise mittels bekannter, kostengünstiger Verfahren wie dem Siebdruckverfahren mit einem Rakel, dem Tampondruck oder dem Tintenstrahldruck auf zumindest einer Oberfläche des Glases oder des Glaskeramikmaterials erzeugt werden.

In einer Weiterbildung der Erfindung können auch das erfindungsgemäß erzeugte Glasprodukt oder der erfindungsgemäß erzeugte Glaskeramikartikel nach der Erzeugung der lokalen Erhöhung zumindest teilweise mit einer Schicht versehen werden.

Mit der vorliegenden Erfindung können somit zumindest teilweise beschichtete Glasprodukte oder Glaskeramikartikel erzeugt werden, welche lokale Erhöhungen umfassen. In einer besonders vorteilhaften Ausführungsform können die Anordnung der lokalen Erhöhung und der Schicht derart aufeinander abgestimmt sein, dass sich haptisch wahrnehmbare und visuelle Eigenschaften des Glasproduktes oder des Glaskeramikartikels ergänzen, um beispielsweise Bedienzonen oder Funktionsflächen sowohl haptisch als auch optisch einfach wahrnehmbar zu gestalten. Eine Funktionsfläche kann beispielsweise eine Kochzone sein.

Glaskeramiken im Sinne der Erfindung sind insbesondere solche Werkstoffe, bei welchen der kristalline Anteil gegenüber dem Anteil der Restglasphase überwiegt. Dies gilt vorzugsweise sowohl für die Volumen-, als auch für die Massenanteile. Vorzugsweise beträgt der kristalline Anteil mindestens 60 Gewichtsprozent. Für die Erfindung geeignet sind beispielsweise Glaskeramiken, wie sie aus der DE 10 2004 050 263 B4 bekannt sind. Bei diesen Glaskeramiken liegt der Anteil der Hochquarz-Mischkristallphase vorzugsweise im Bereich von 60 Gew% bis 70 Gew%. Andere für die Erfindung geeignete Glaskeramiken können auch noch höhere Gewichts- und/oder Volumenanteile der kristallinen Phase aufweisen. Durch die Wahl der Strahlungsquelle und die Form der Einbringung der Energie kann der Bereich der Geometrieänderung von punktförmig über linienförmig bis zu flächig sein.

Eine punktförmige Bestrahlung gestattet viele Freiheitsgrade in der Gestaltung der Erhebungen. "Punktförmig" bedeutet in diesem Zusammenhang selbstverständlich, dass der bestrahlte Bereich immer noch eine gewisse, kleine Fläche einnimmt. Geeignet sind insbesondere Abmessungen im Bereich bis zur zweifachen Dicke des Glas- oder Glaskeramikelements.

Gemäß einer Weiterbildung des Verfahrens wird also die elektromagnetische Strahlung auf einen Bereich mit den äußeren Abmessungen zwischen 10% bis 200% der Glasdicke konzentriert. Vorzugsweise ist dieser Bereich kreisförmig oder ellipsenförmig, kann aber in Einzelfällen mittels geeigneter optischer Einrichtungen wie Festoptiken auch linienförmig ausgebildet sein, wobei dann die Linienbreite nicht größer als die zweifache Dicke, vorzugsweise nicht größer als die Dicke des Glas- oder Glaskeramikelements sein sollte. Die Geometrie und Länge der Linie ist beliebig und kann offen oder geschlossen sein. So sind, mittels entsprechender Festoptik, zum Beispiel Geraden, Bögen, Ringe oder andere geometrische Elemente herstellbar, ohne den Laser oder das Werkstück zu bewegen.

Bei einer punktförmigen Einbringung der Energie kann durch Bewegung der Strahlungsquelle oder Bewegung des Bauteils der Bereich der Geometrieänderung eine beliebige Form annehmen. Auf diese Weise lassen sich beispielsweise Buchstaben, Zeichen oder auch Dreiecke, Vierecke oder beliebige andere geometrische Formen in Form von Erhebungen auf der Oberfläche des Bauteils herstellen.

Die Abmessungen der Geometrieänderung können bei punktförmigen Erhebungen Durchmesser ab 0,05 mm, vorzugsweise 0,5 mm bis 3 mm erreichen, sowie bei linienförmigen Erhebungen Linienbreiten ab 0,05 mm, vorzugsweise 0,5 mm bis 3 mm und beliebige Linienlängen erreichen.

Gemäß einer Weiterbildung der Erfindung wird also der punktförmige Bereich, in welchem die elektromagnetische Strahlung eingestrahlt wird, über die Oberfläche des Glas- oder Glaskeramikelements bewegt, um eine Erhebung mit einer Fläche größer als die Fläche des punktförmigen Bereiches zu erzeugen.

Als Strahlungsquellen können UV-Strahlungsquellen, IR Strahler mit Wolframwendel, Laserquellen, wie z.B. Dioden-Laser, Faser-Laser oder auch andere Strahlungsquellen, deren elektromagnetische Strahlung in das Glaskeramikmaterial zumindest teilweise eindringen kann, zum Einsatz kommen.

Die Wahl der richtigen Strahlungsquelle richtet sich nach dem Absorptionsvermögen des zu behandelnden Glaskeramikmaterials im Bereich der Wellenlänge der Strahlungsquelle.

Besonders bevorzugt wird die Erwärmung mit einem Infrarotlaser, vorzugsweise einem Diodenlaser, als Strahlungsquelle durchgeführt.

Für keramisierte Ceran-Glaskeramiken, beziehungsweise allgemeiner Lithium-Aluminosilikat-Glaskeramiken, eignen sich z.B. Diodenlaser mit einer Wellenlänge im nahen Infrarotbereich, beispielsweise im Bereich von 1 $\mu$m. Bei dieser Wellenlänge beträgt die Transmission einer 4 mm dicken Glaskeramikplatte zwischen 50% und 80%, so dass genügend viel Strahlung durch die gesamte Dicke der Platte dringt, um diese homogen über die Dicke der Platte an der Stelle der Energieeinbringung aufzuheizen.

Bei einer genügend hohen Leistung kann somit innerhalb weniger Sekunden eine Temperatur an der Stelle der Energieeinbringung von größer 700°C erzielt werden.

Um eine lokale Erhebung zu erzeugen, wird also dazu auch lokal im Volumen eine Temperaturerhöhung hervorgerufen. Dies erfolgt durch elektromagnetische Strahlung in einem Wellenlängenbereich, in welchem das Glas oder die Glaskeramik eine Teildurchlässigkeit für die auftreffende elektromagnetische Strahlung hat. Damit wird nicht nur oberflächlich, sondern über die gesamte Dicke oder in einem Teilvolumen des Glaskeramikelements Energie eingebracht.

Ist das Produkt aus Strahlungsdichte und Absorption hoch genug, dann kommt es zu einer (lokalen) schockartigen Temperaturerhöhung und damit zu einer Volumenänderung. Ist das Produkt zu groß, wird nur die Oberfläche erwärmt und damit überhitzt und der Effekt im Volumen wird nicht groß genug. Ist das Produkt zu klein, dann wird zu langsam erwärmt und der Effekt tritt entweder nicht auf oder ist nicht mehr lokal eindeutig zu begrenzen, d.h. verschmiert.

Gemäß einer Weiterbildung der Erfindung wird daher die Strahlungsdichte, beziehungsweise Leistungsdichte der elektromagnetischen Strahlung und/oder der Absorptionskoeffizient k des Glaskeramikmaterials so gewählt, dass das Produkt P der Leistungsdichte und des Absorptionskoeffizienten k mindestens $P = 0,35$ $(W/mm^3)*(1/mm)$ beträgt. Der Absorptionskoeffizient sollte dabei zur Vermeidung einer nur oberflächlichen Erwärmung gemäß noch einer Weiterbildung der Erfindung höchstens $2/d$ betragen, wobei d die Dicke des Glas- oder Glaskeramikelements bezeichnet.

Vorzugsweise wird die elektromagnetische Strahlung mit einer mittleren Leistungsdichte von zumindest 2,5 $W/mm^2$ auf den zu erwärmenden Bereich des Glas- oder Glaskeramikelements eingestrahlt, um eine hinreichend schnelle Erwärmung zu erreichen.

Um Erhebungen mit steilen Flanken zu erhalten, die haptisch gut erfassbar sind, ist es günstig, wenn die Erwärmung sehr schnell erfolgt, so dass ein steiler Temperaturgradient in Richtung senkrecht zur Einstrahlrichtung im Glas- oder Glaskeramikmaterial erzeugt wird. Dieser Temperaturgradient bewirkt dann eine entsprechend scharfe Abgrenzung zwischen dem Bereich niedrigerer Dichte unter der Erhebung und dem umgebenden Material, der wiederum zu lokalisierten Verformungen führt. Es wird daher bevorzugt, dass die Erwärmung mit einem Temperaturanstieg von zumindest 20 K pro Sekunde erfolgt. Bei Ausgangsgläsern für Glaskeramiken (Grüngläsern) ist der schnelle Temperaturanstieg auch von Vorteil, um den Temperaturbereich der Keimbildung schnell zu durchschreiten und damit einer vorzeitigen Keramisierung entgegenzuwirken. Dieser Temperaturbereich der Keimbildung liegt bei typischen Grüngläsern, wie insbesondere Lithium-Aluminosilikatgläsern im Bereich von 700 °C bis 800 °C. Allgemein wird es bevorzugt, wenn dieser Temperaturbereich beim Aufheizen in weniger als 20 Sekunden durchschritten wird.

Um einen Schichtauftrag auf das Glaselement oder Glaskeramikmaterial nach dem Erzeugen der Erhebung zu begünstigen, kann es aber auch vorteilhaft sein, die Flanken nicht ganz so steil auszubilden, so dass ein eher weicher geometrischer Verlauf der Erhebung erreicht wird.

Ein weicher geometrischer Verlauf der Erhebung zeichnet sich demnach durch sanfte Radienübergänge, eine geringe absolute Höhe der Erhebung oder flache Steigungen aus. Als besonders günstig hat sich herausgestellt, wenn das Verhältnis der Höhe h1 einer Erhebung zur Gesamtbreite b1, welche die Breite der Erhebung b2 und die Breite von möglichen Vertiefungen um die Erhebung umfasst, in einem Bereich von kleiner als 0,2, bevorzugt von kleiner als 0,1 liegt. Ferner ist es günstig, wenn das Verhältnis der Tiefe h2 einer die Erhebung umgebenden Vertiefung zur Höhe h1 der Erhebung weniger als 0,5 beträgt. Schließlich ist es vorteilhaft, wenn das Verhältnis der Breite der Erhebung b2 zu der Gesamtbreite b1 zwischen 0,1 und 1 liegt. Demnach sind folgende Verhältnisse günstig:

- h1/b1 < 0,2, besonders günstig h1/b1 < 0,1
- h2/h1 < 0,5
- 1 > b2/b1 > 0,1.

Die Höhe und die Tiefe werden dabei jeweils ausgehend von der jeweiligen Oberfläche aus gemessen.

Auf diese Weise kann besonders günstig ein Standard-Dekorierungsverfahren wie der Siebdruck zum Einsatz kommen, um ein erfindungsgemäß erzeugtes Glasprodukt oder einen erfindungsgemäß erzeugten Glaskeramikartikel zu beschichten. Es hat sich gezeigt, dass das hierzu verwendete Rakel sehr gut über die erzeugten Erhebungen führen lässt. Besonders einfach lassen sich hierdurch dünne Schichten mit einer Schichtdicke von etwa 0,1 mm oder weniger auf das Glasprodukt oder den Glaskeramikartikel aufbringen.

In einer anderen Ausführungsform umfasst das Glas oder das Glaskeramikmaterial bereits vor dem Erzeugen der erhabenen Struktur, zumindest teilweise, eine Schicht oder eine Beschichtung auf der Oberfläche. Bevorzugt ist dieses die Oberfläche, auf der auch die erhabene Struktur geschaffen wird. Das erfindungsgemäße Verfahren ermöglicht auch das Erzeugen der erhabenen Struktur in derartigen Fällen. Hierbei ist es vorteilhaft, wenn die Wärmeeinflusszone eine geringe laterale Ausbreitung aufweist. Insbesondere ist darauf zu achten, dass ein hinreichender Abstand zu der Schicht eingehalten wird, so dass die Schicht nicht überhitzt wird, was zu Beschädigungen führen kann. Die für die Erzeugung der erhabenen Struktur erforderliche Wärmeeinflusszone sollte daher möglichst frei von Schichten oder Beschichtungen gehalten sein. Die Erfindung bietet den Vorteil, dass diese Wärmeeinflusszone sehr schmal gehalten werden kann, so dass eine Unterbrechung der Schicht im Bereich der Wärmeeinflusszone optisch kaum wahrnehmbar ist.

Generell ist es dabei auch von Vorteil, wenn das Glas- oder Glaskeramikelement vorgewärmt wird. Auf diese Weise kann die Behandlungsdauer verkürzt und damit auch ein steiler Temperaturgradient erzielt werden. Ein Vorheizen ist insbesondere auch bei der Erzeugung lokaler Erhöhungen in Glaselementen von Vorteil, um mechanische Spannungen nach dem Abkühlen zu reduzieren. Allgemein wird bevorzugt, dass das Glas- oder Glaskeramikelement auf eine Temperatur von mindestens 300°C, vorzugsweise mindestens 400 °C vorgeheizt wird, bevor das Glaselement oder Glaskeramikelement mit elektromagnetischer Strahlung in einem lokalen Bereich der Oberfläche bestrahlt wird, um die Oberflächenverformung in Form einer Erhöhung zu erzeugen.

Nach Abkühlung der Platte auf Raumtemperatur ist an der Stelle der Energieeinbringung das Volumen größer als vor der Strahlungsbehandlung.

Gegebenenfalls kann ein thermischer Nachbehandlungsschritt nach der Abkühlung vorgesehen werden. Mit einem solchen Nachbehandlungsschritt können durch die Aufheizung zuvor induzierte Zugspannungen wieder abgebaut werden. Auch ist eine individuelle Feineinstellung der erzeugten Transmission durch einen thermischen Nachbehandlungsschritt möglich.

Mögliche Varianten der thermischen Nachbehandlung sind:

- Ein zweiter Aufheizschritt mittels elektromagnetischer Strahlung, vorzugsweise mittels eines Lasers, der das Volumen auf eine Entspannungstemperatur aufheizt und dort hält.

- Ein thermisches Nachwärmen und Entspannen im konventionellen Ofen, beispielsweise in einem Kühlofen.

Generell wird bei Glas- oder Glaskeramikplatten die Erzeugung der lokalen Erhöhung auf der Nutzseite bevorzugt, um haptisch erfassbare Strukturen zu erzeugen. Bei einseitig genoppten Glas- oder Glaskeramikelementen werden daher lokale Erhöhungen vorzugsweise auf der glatten Seite aufgebracht.

Der Bereich der Energieeinbringung kann sowohl über die Formung der Einstrahlung der Energie erfolgen, als auch über eine zusätzliche Maskierung der zu behandelnden Platte, so dass nicht zu verändernde Teile des Glas- oder Glaskeramikelements wirksam vor dem Auftreffen von Strahlung geschützt werden. Auch Optiken, welche eine Strahlformung aus einem runden Strahlfleck in einen rechteckigen oder linienförmigen Strahlbereich ermöglichen und damit eine simultane Bestrahlung eines abgegrenzten lokalen geometrischen Bereichs ermöglichen, sind für das erfindungsgemäße Verfahren in vorteilhafter Weise einsetzbar.

Der Vorteil dieses Verfahren gegenüber dem Stand der Technik ist die Tatsache, dass man mit einem monolithischen Bauteil auskommt ohne jegliche Anpassungen der Zusammensetzung, Fügungen oder Bearbeitungen. Dabei kann das monolithische Bauteil zumindest teilweise eine Schicht oder eine Beschichtung umfassen. Das Verfahren ist sehr schnell (im Sekundenbereich), hoch flexibel und extrem gut anpassbar an verschiedenste Geometrien und Anwendungen. Auch dreidimensional verformte Bauteile können behandelt werden. Die verfahrensgemäße Behandlung des Bauteils kann sowohl vor, als auch nach dem Keramisierungsschritt im Falle einer Glaskeramik durchgeführt werden.

Die Erfindung kann interessant sein für folgende Anwendungen:

- Kochzonenmarkierungen oder Abgrenzungen der Bedienelemente auf Glaskeramikkochflächen, auch beispielsweise für sogenannte "vulnerable people", um mit haptischen Strukturen sicherheitsrelevante Informationen auf Kochflächen bereitzustellen,
- Aufbringen eines 1D (Balken) oder 2D (Dot Matrix) - Barcodes auf die Oberfläche des Produktes (z.B. eines Vials / einer Spritze) zur dauerhaften Kennzeichnung,
- Aufbringen einer Füllmengenskala oder Füllhöhenmarkierung auf die Glaswand des Produktes (z.B. Vials, Behälter, Rohre) oder einer anderen Markierung,
- Aufbringen von optischen Designelementen auf Flachgläser (z.B. Architekturverglasung) wie Firmenlogos oder geometrische Objekte (Pfeile als Wegweiser, Fluchtweg),
- dauerhafte fälschungssichere Markierung von Produkten durch ein erhabenes Logo auf der Oberfläche des Glases,
- Aufbringen von Piktogrammen, Buchstaben, geometrischen Objekten in Touch-Anwendungen für Handy-Cover oder anderen elektronischen Geräten,
- Erzeugung von Fühlstrukturen für sehbehinderte Menschen, z.B. auf einer Kochfläche
- Verringerung der Kontaktfläche von Topfboden und Glaskeramik-Kochfläche, dadurch Schaffung einer Wärmeisolation, insbesondere bei Induktions-Kochfeldern,
- Erzeugung von haptischen Strukturen in Vertiefungen, insbesondere in konkav geformten oder vertieften Bedienelementen,
- Erzeugung von Zonen auf der Oberfläche, vorzugsweise auf der Nutzseite, welche sowohl haptisch als auch visuell wahrnehmbare Eigenschaften aufweisen.

Die Erfindung wird nachfolgend anhand von Ausführungsbeispielen und den Zeichnungen näher erläutert. In den Zeichnungen bezeichnen gleiche Bezugszeichen gleiche oder entsprechende Elemente.

Es zeigen:

Fig. 1 eine Anordnung zur Durchführung des erfindungsgemäßen Verfahrens,

Fig. 2 einen schematischen Querschnitt durch eine erfindungsgemäßes Glaskeramikelement,

Fig. 3 einen spektralen Transmissionsverlauf eines Grünglases zur Herstellung einer Glaskeramik,

Fig. 4 ein Transmissionsprofil einer volumengefärbten Glaskeramikplatte entlang einer Positionskoordinate senkrecht zur Längsrichtung einer lokalen Erhebung,

Fig. 5 Röntgenbeugungsspektren an einem aufgehellten und einem unveränderten Bereich einer volumengefärbten Glaskeramik,

Fig. 6 den spektralen Transmissionsgrad eines behandelten und eines unbehandelten Bereichs einer Glaskeramik-Platte,

Fig. 7 ein Höhenprofil einer Erhebung,

Fig. 8 eine Weiterbildung der in Fig. 2 gezeigten Ausführungsform,

Fig. 9 ein Glaskeramik-Kochfeld,

Fig. 10 eine fotografische Aufnahme eines Glaskeramikelements mit lokaler Erhöhung und

Fig. 11 einen Konturscan entlang einer Strecke quer über die lokale Erhöhung des in Fig. 10 gezeigten Elements hinweg,

Fig. 12 eine fotografische Aufnahme eines Glaselements mit ringförmiger lokaler Erhöhung, und

Fig. 13 einen Konturscan an dem in Fig. 12 gezeigten Glaselement entlang einer Strecke quer über die lokale Erhöhung hinweg,

Fig. 14 eine fotografische Aufnahme eines Glaskeramikelements mit zwei ineinandergeschachtelten ringförmigen Erhöhungen,

Fig. 15 einen Konturscan an dem in Fig. 14 gezeigten Glaskeramikelement,

Fig. 16 eine Variante des in Fig. 2 gezeigten Beispiels mit gegenüberliegenden Erhebungen,

Fig. 17 schematisch eine weitere Ausführungsform des in Fig. 2 gezeigten Beispiels mit gegenüberliegenden Erhebungen, wobei eine Seite eine Schicht umfasst,

Fig. 18 schematisch eine weitere Ausführungsform des in Fig. 2 gezeigten Beispiels mit gegenüberliegenden Erhöhungen, wobei eine Seite eine Schicht umfasst, welche auch die Erhebung betrifft, und

Fig. 19 schematisch eine Ausführungsform mit einer Erhebung mit günstigen geometrischen Dimensionen.

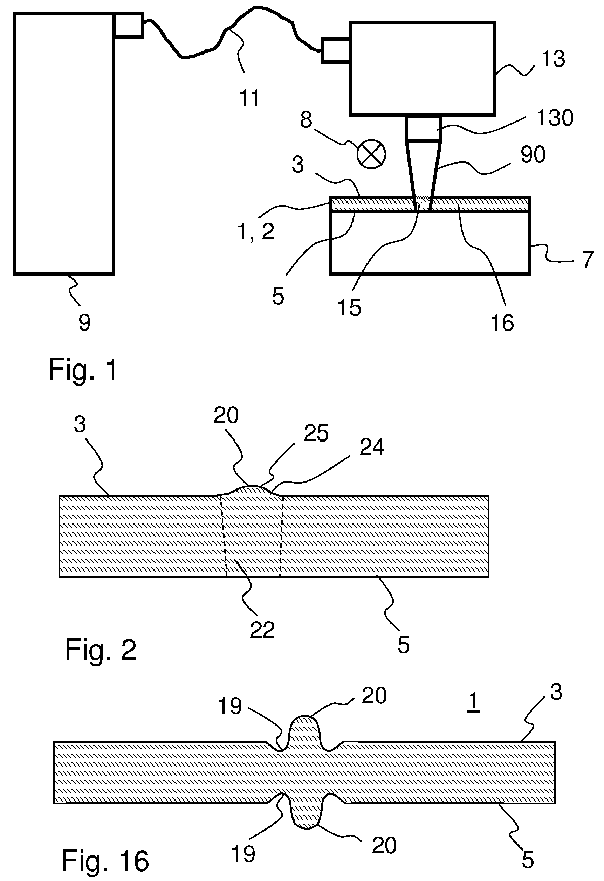

Anhand von Fig. 1 wird ein Ausführungsbeispiel des erfindungsgemäßen Verfahrens erläutert. Es wird ein Glaskeramikelement 1, hier in Form einer keramisierten Glaskeramikplatte (eine Lithium-Aluminosilikat-Glaskeramik mit Hochquarz-Mischkristallen als Haupt-Kristallphase) mit den Abmessungen 50mm x 50mm und 4mm Dicke auf einer im Schlickerguss hergestellten Siliziumdioxid-Keramikunterlage 7 mit 100mm x 100mm und 30mm Dicke mit einer Seite 5 zur Siliziumdioxid-Keramikunterlage 7 hin platziert. Siliziumdioxid-Keramikunterlage 7 und Glaskeramikplatte sind bei Raumtemperatur gehalten. Über dieser Anordnung ist ein Laser-Scanner 13 mit einer fokussierenden Optik 130, Brennweite 250mm, so installiert, dass der Laserstrahl 90 senkrecht zur Oberfläche der Glaskeramikplatte auftrifft. Im Fokus beträgt der Durchmesser des Laserstrahls 1,5mm. Die Anordnung aus Quarzalunterlage 7 und Glaskeramikplatte wurde in der Fokusebene platziert. Über eine Faser 11 wird der Laserscanner 13 mit einer Laserstrahlung zwischen 900nm und 1100nm Wellenlänge beaufschlagt. Als Laserquelle 9 dient dabei ein Diodenlaser, beispielsweise der Firma laserline, die eine regelbare Leistung zwischen 0 W und 3000 W liefert.

Der Laserscanner wird nun beispielsweise so programmiert, dass mit einer Geschwindigkeit von 1 m/s ein Kreis von 40mm Durchmesser abgefahren wird. Nach Aktivierung der Laserquelle 9 wird die Glaskeramikplatte mit einer Leistung von 1000W und einer Dauer von 30s lokal bestrahlt. Danach wird der Laser 9 abgeschaltet und die Glaskeramikplatte an Luft frei abgekühlt. Im Bereich der Einstrahlung ist ein erhabener Kreis auf der Glaskeramikplatte deutlich zu erkennen und zu ertasten. Der Rest der Platte bleibt geometrisch unverändert. Dies betrifft sowohl die Ebenheit als auch lokale Dickenschwankungen.

Ohne Beschränkung auf das vorstehend erläuterte Ausführungsbeispiel wird eine schnelle Abkühlung bevorzugt. Dies ist günstig, um den Effekt der Volumenänderung einzufrieren. In Weiterbildung der Erfindung ist daher vorgesehen, dass die Glaskeramik nach der Erwärmung mit einer Abkühlrate von mindestens 1 K pro Sekunde, vorzugsweise zumindest 5 K pro Sekunde, besonders bevorzugt zumindest 10 K pro Sekunde zumindest innerhalb eines Temperaturbereichs von der Maximaltemperatur bis 100 K unterhalb der Maximaltemperatur abgekühlt wird.

Alternativ kann anstelle eines Glaskeramikelements 1 auch ein Glaselement 2 verwendet werden. Dieses Glaselement 2 wird dann nach dem Erzeugen der erhabenen Struktur keramisiert.

Das Glaselement oder das Glaskeramikelement können bereits vor der Erzeugung der erhabenen Struktur eine Schicht oder eine Beschichtung umfassen. Dies kann beispielsweise eine Dekorschicht sein, die auf einer Oberfläche des Glasproduktes 2 oder des Glaskeramikelements 1, vorzugsweise auf der jeweiligen Nutzseite, aufgebracht ist. Diese Schicht kann beispielsweise besonders kostengünstig mittels bekannter Verfahren wie dem Siebdruckverfahren, dem Tampondruck oder dem Tintenstrahldruck erzeugt werden.

Die geringe laterale Ausbreitung der Wärmeeinflusszone ermöglicht es, die Schicht bis nah an den umzuformenden Bereich heranzuführen. Ein hinreichender Abstand der Wärmeeinflusszone zu der Schicht sollte aber eingehalten werden, um die Schicht nicht zu überhitzen, was zu Beschädigungen führen kann. Die für die Erzeugung der erhabenen Struktur erforderliche Wärmeeinflusszone sollte daher möglichst frei von Schichten oder Beschichtungen gehalten sein.

Um einen Schichtauftrag auf das Glaselement oder Glaskeramikmaterial nach dem Erzeugen der Erhebung zu begünstigen, kann es aber auch vorteilhaft sein, die Flanken nicht ganz so steil auszubilden, so dass ein eher weicher geometrischer Verlauf der Erhebung erreicht wird.

Ein weicher geometrischer Verlauf der Erhebung zeichnet sich demnach durch sanfte Radienübergänge, eine geringe absolute Höhe der Erhebung oder flache Steigungen aus. Auf diese Weise kann besonders günstig ein Standard-Dekorierungsverfahren wie der Siebdruck zum Einsatz kommen, um ein erfindungsgemäß erzeugtes Glasprodukt oder einen erfindungsgemäß erzeugten Glaskeramikartikel zu beschichten. Es hat sich gezeigt, dass das hierzu verwendete Rakel sehr gut über die erzeugten Erhebungen führen lässt. Besonders einfach lassen sich hierdurch dünne Schichten mit einer Schichtdicke von etwa 0,1 mm, 0,01 mm, 0,005 mm oder weniger auf das Glasprodukt oder den Glaskeramikartikel aufbringen.

Gemäß einer bevorzugten Ausführungsform des erfindungsgemäßen Verfahrens kann das Glas- oder Glaskeramikelement vor dem Einstrahlen der elektromagnetischen Strahlung, vorzugsweise vor der wie im Beispiel der Fig. 1 gezeigten Laserbestrahlung, vorgewärmt werden. Dieses Vorwärmen ist günstig, um die gewünschte Temperatur für das Erzeugen der erhabenen Struktur schnell zu erreichen. Besonders bei der Umformung eines Glaselements 2 ergibt sich hier der Vorteil, dass der Temperaturbereich der Keimbildung schnell durchschritten wird, so dass eine vorzeitige Keramisierung unterdrückt wird. Insbesondere werden dabei auch nach der Abkühlung auftretende mechanische Spannungen minimiert, da der zur Umformung erforderliche Temperaturhub verkleinert wird. Die Vorheizung erfolgt vorzugsweise auf eine Temperatur von mindestens 300 °C. Bei dem in Fig. 1 gezeigten Beispiel ist eine Heizquelle 8 vorgesehen, um das Substrat vorzuwärmen. Beispielsweise kann auch für die Heizquelle eine Strahlungsquelle verwendet werden, die zum Vorwärmen aber das Glas- oder Glaskeramikelement nicht lokal, sondern großflächig bestrahlt und aufheizt. Gemäß einem

Ausführungsbeispiel wird ein Glaselement 2 oder Glaskeramikelement 1 auf eine Temperatur im Bereich von 400 °C bis 500 °C vorgewärmt, bevor mittels eines Lasers lokal eine weitere Aufheizung durchgeführt und eine Verformung der Oberfläche in Form einer Erhöhung erfolgt.

Fig. 2 zeigt einen Querschnitt durch ein erfindungsgemäßes Glaskeramikelement 1. Durch die schnelle Aufheizung mit dem Laser 9 oder einer hinsichtlich der Leistung und der Absorption im Glaskeramikmaterial vergleichbaren Strahlungsquelle wurde auf einer Seite 3 eine lokale Erhöhung oder Erhebung 20, beziehungsweise eine erhabene Struktur erzeugt. Die beim Abkühlen eingefrorene Volumenänderung bewirkt eine im Bereich der Erhebung 20 in das Glaskeramikmaterial hineinreichenden Bereich 22 mit gegenüber dem umgebenden Glaskeramikmaterial erniedrigter Dichte. Dieser Bereich 22 kann sich, wie bei dem in Fig. 2 gezeigten Beispiel bis zu einer Seite 5 erstrecken, welche der Seite 3 mit der Erhebung 20 gegenüberliegt.

Mit dem erfindungsgemäßen Verfahren erzeugte Erhebungen, beziehungsweise lokalen Erhebungen 20 weisen ein charakteristisches Profil mit abgerundeten Rändern auf. Insbesondere weist, wie schematisch auch in Fig. 2 dargestellt, der Rand der Erhebung 20 eine konkave Krümmung 24 auf, welche in Richtung zur Mitte der Erhebung hin in eine konvexe Krümmung 25 übergeht.

Wird anstelle eines Glaskeramikelements ein Glaselement verwendet und erst nach Verformen der Oberfläche und Erzeugung einer Erhöhung 20 eine Keramisierung durchgeführt, so können sich beim Keramisieren Dichteunterschiede zumindest teilweise ausgleichen. In diesem Fall fehlt ein Bereich 22, oder dessen Dichte unterscheidet sich zumindest nicht wesentlich vom umgebenden Glaskeramikmaterial.

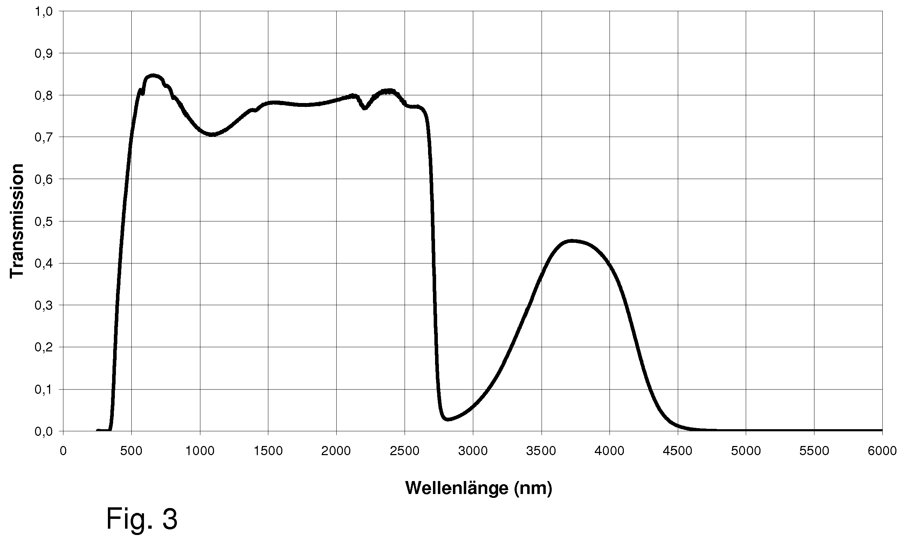

Fig. 3 zeigt einen spektralen Transmissionsverlauf eines sogenannten Grünglases. Dieses Grünglas kann durch eine Keramisierung in eine Lithium-Aluminosilikat-Glaskeramik umgewandelt werden. Das Glaselement, an welchem die Transmissionsmessung durchgeführt wurde, weist eine Dicke von 4 Millimetern auf. Damit die Strahlung das Glaselement 2 durchdringt und dabei zumindest teilweise absorbiert wird, eignen sich besonders Wellenlängen im Bereich von 500 Nanometern bis 2700 Nanometern. Ebenfalls möglich sind auch Wellenlängen im Bereich von 3200 Nanometern bis 4200 Nanometern, da das Glas auch in diesem Spektralbereich eine höhere Transmission aufweist, welche das Eindringen der Strahlung gestattet.

Bei volumengefärbten Glaskeramikelementen 1 kann zusätzlich zur Änderung der Oberfläche auch überraschend eine lokale Farbänderung erzielt werden. Insbesondere kann die Lichttransmission lokal im Bereich der Erhebung 20 erhöht werden. Eine solche Farbänderung an volumengefärbten Materialien konnte an einer mit färbenden Metallionen, im Speziellen mit Vanadiumoxid gefärbten Glaskeramik nachgewiesen werden.

Demgemäß ist in Weiterbildung der Erfindung, ohne Beschränkung auf die speziellen dargestellten Ausführungsbeispiele vorgesehen, dass die Glaskeramik des Glaskeramikartikels mit färbenden Metallionen volumengefärbt ist, wobei sich im Bereich der lokalen Erhebung die Färbung der Glaskeramik von einem zweiten Bereich neben der lokalen Erhöhung 20 unterscheidet, so dass der Absorptionskoeffizient im Bereich der lokalen Erhöhung 20 kleiner als der Absorptionskoeffizient des zweiten Bereichs und damit die integrale Lichttransmission im sichtbaren Spektralbereich an der lokalen Erhöhung 20 höher ist, als die integrale Lichttransmission des zweiten Bereichs.

Unter einer volumengefärbten Glaskeramik wird im Sinne der Erfindung ein Material verstanden, bei welchem die Farbzentren oder färbenden Ionen im Material verteilt sind. Diese sind also nicht wie bei Pigmenten lokal in Form von färbenden Kristalliten konzentriert. Entsprechend einem Farbstoff sind die farbgebenden Ionen oder Farbzentren also im Glas oder der Glaskeramik gelöst, während Pigmente im Material dispergiert sind. Eine Volumenfärbung beeinflusst demgemäß zwar die Transmission, nicht aber die Streuung, wohingegen Pigmente selbst streuende Partikel darstellen. Gegebenenfalls zusätzlich vorhandene Pigmente werden aber nicht ausgeschlossen.

Das Verfahren gemäß der Erfindung eignet sich sehr gut dazu, auch die Färbung eines mit Vanadiumoxid volumengefärbten Glaskeramik-Artikels lokal abzuschwächen. Demgemäß wird hierbei in dem lokalen Bereich die Transmission im sichtbaren Spektralbereich zwischen 380 Nanometern und 780 Nanometern durch die Erhitzung angehoben. Gemäß einer Ausführungsform der Erfindung ist daher ein mit Vanadiumoxid volumengefärbtes Glaskeramikelement vorgesehen, bei welchem im erfindungsgemäß behandelten Bereich, also dort, wo die lokale Erhöhung hergestellt wird, die integrale Lichttransmission im sichtbaren Spektralbereich gegenüber einem benachbarten zweiten, nicht behandelten Bereich angehoben ist.

Auf diese Weise können in einfacher Weise beispielsweise Fenster mit höherer Transmission in einem ansonsten dunkel erscheinenden Glaskeramik-Kochfeld erzeugt werden. Unter einem solchen Fenster kann dann auch eine Anzeige angebracht werden, welche für den Betrachter gut sichtbar durch die lokale Erhöhung hindurch leuchtet. Unter einem Fenster als besonders bevorzugter Form eines mit dem erfindungsgemäßen Verfahren hergestellten aufgehellten Bereichs wird ein Bereich verstanden, der von mindestens drei Seiten oder zu mindestens 50% seines Umfangs von benachbarten, nicht aufgehellten zweiten Bereichen umgeben ist. Vorzugsweise ist der aufgehellte erste Bereich vollständig von zweiten Bereichen, beziehungsweise nicht aufgehelltem Glaskeramikmaterial umgeben.

Typischerweise liegt die Temperatur, bei welcher die Transmissionssteigerung auftritt, oberhalb der Temperatur, bei welcher die Viskosität der Glaskeramik bei $10^{14}$ dPas liegt. Wird nicht bis zum Erweichungspunkt, bei welchem die Viskosität einen Wert von $10^{7,6}$ dPa*s aufweist, aufgeheizt, kann auch ohne Formveränderungen eine Aufhellung erzielt werden. Demgemäß können je nach Aufheizung lokale Erhöhungen und zusätzlich nur aufgehellte Bereiche hergestellt werden.

Um eine hinreichend dunkle Färbung zu erzielen, wird bevorzugt, dass die Glaskeramik zumindest 0,005, vorzugsweise zumindest 0,01 Gewichtsprozent Vanadiumoxid enthält.

Gemäß einer Ausführungsform der Erfindung ist dabei die Glaskeramik mit färbenden Ionen, vorzugsweise mit Vanadiumoxid so eingefärbt, dass die integrale Lichttransmission der Glaskeramik im sichtbaren Spektralbereich des zweiten Bereichs höchstens 5%, bevorzugt höchstens 2,5% beträgt.

Wird die lokale Erhöhung bereits im Grünglas, also in einem Glaselement 2 erzeugt, ergibt sich eine lokale Aufhellung typischerweise nicht, da die dunkle Färbung erst während der Keramisierung entsteht. Allerdings kann, falls gewünscht, durch einen weiteren Aufheizungsschritt auch wieder eine lokale Aufhellung erzielt werden.

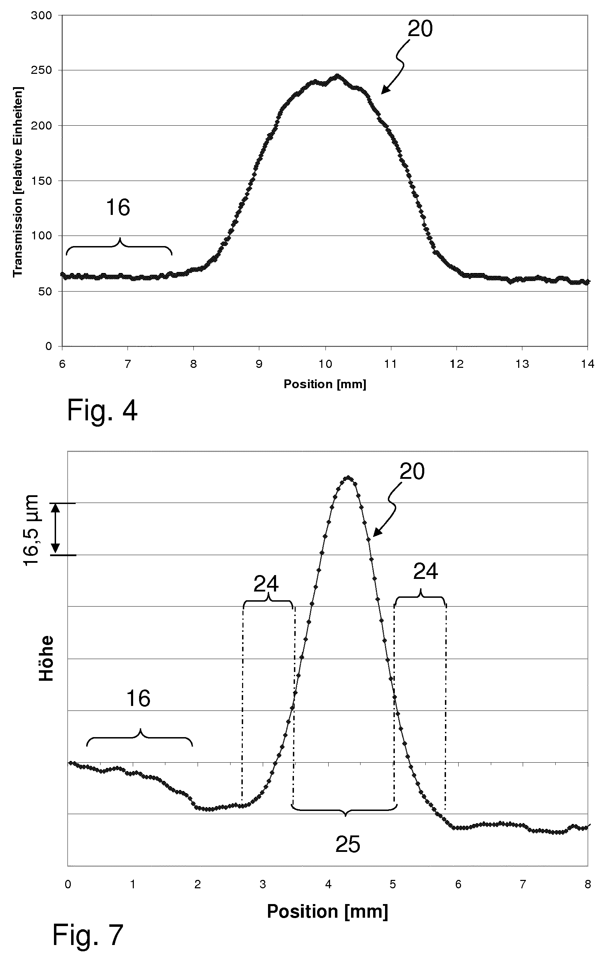

Fig. 4 zeigt als Beispiel ein Transmissionsprofil einer solchen mit Vanadinoxid volumengefärbten Glaskeramik-Probe, bei welcher eine lokale Erhöhung 20 in Form einer Rippe oder Wulst durch das erfindungsgemäße Verfahren hergestellt wurde. Die Richtung der Positionskoordinate verläuft senkrecht zur Längsrichtung der Rippe. Das Profil der lokalen Erhöhung 20 ist auch an der im Zuge der Erwärmung der Glaskeramik hervorgerufenen Entfärbung und damit einhergehenden Transmissionserhöhung gegenüber einem benachbarten zweiten Bereich neben der Erhöhung sichtbar. In Durchsicht betrachtet erscheint der Bereich der lokalen Erhöhung entsprechend deutlich heller. Es ist dabei auch möglich, nur eine Entfärbung, beziehungsweise Aufhellung ohne eine erfindungsgemäße Erhöhung 20 zu erzeugen, wenn eine flachere Temperaturrampe bei der Erwärmung gewählt wird. Wird in einem Bereich nur eine Aufhellung ohne Volumenänderung erzeugt, kann hier anders als oben dargelegt, das Produkt P der Leistungsdichte und des Absorptionskoeffizienten k kleiner gehalten werden. Für das Produkt wird ein Wert von mindestens P = 0,25 (W/mm$^3$)*(1/mm) bevorzugt.

Mit diesem Verfahren wird eine volumengefärbte, monolithischer Glaskeramik-Artikel, beispielsweise in Form einer Kochfläche erhalten, welche einen ersten Bereich aufweist, in welchem die Färbung der Glaskeramik sich von einem zweiten, benachbarten Bereich unterscheidet, so dass der Absorptionskoeffizient des ersten Bereichs kleiner als der Absorptionskoeffizient eines zweiten, benachbarten Bereichs 16 und damit die integrale Lichttransmission im sichtbaren Spektralbereich des ersten Bereichs höher ist, als die integrale Lichttransmission des zweiten, benachbarten Bereichs, wobei die Lichtstreuung in der Glaskeramik des ersten Bereichs typischerweise höchstens um absolut 20 Prozent, vorzugsweise höchstens um absolut 10 Prozent, besonders bevorzugt höchstens um absolut 5%, insbesondere bevorzugt höchstens um absolut 1% gegenüber der Lichtstreuung in der Glaskeramik des zweiten Bereichs erhöht ist. Die Lichtstreuung in der Glaskeramik des ersten Bereichs ist also im Wesentlichen gleich zur Lichtstreuung des zweiten, benachbarten Bereichs mit unveränderter Lichttransmission. Unter die Obergrenze einer höchstens um absolut 20 Prozent höheren Lichtstreuung fällt auch der Fall, dass die Lichtstreuung im ersten Bereich kleiner ist, als im zweiten Bereich. Mit der allenfalls geringfügig erhöhten Lichtstreuung tritt diese nicht als sichtbarer Effekt hervor. Die Lichtstreuung ist der Anteil der eingestrahlten Gesamtintensität abzüglich des direkt transmittierten Lichts, der Fresnel-Reflexion und Absorption. Die absolute, in Prozent angegebene Erhöhung der Streuung bezieht sich auf den Anteil des gestreuten Lichts bei der Transmission eines Lichtstrahls. Beträgt der Anteil der gestreuten Lichtintensität im zweiten Bereich beispielsweise 3% der Gesamtintensität, so bedeutet eine Erhöhung um absolut 5% im ersten Bereich dann ein Anteil der gestreuten Lichtintensität im ersten Bereich von 3% + 5% = 8%. Die Begriffe der Transmission, Streuung, Absorption und Remission, wie sie im Sinne der Erfindung verwendet werden, entsprechen den Definitionen gemäß DIN 5036-1 und können mit den Messvorschriften gemäß ISO 15368 10 bestimmt werden. Der genannte erste Bereich weist zusätzlich die erfindungsgemäße lokale Erhöhung 20 auf. Es ist möglich, einen oder mehrere weitere erste Bereiche ohne Erhöhung zu erzeugen. Der Effekt einer kaum veränderten Lichtstreuung mit den oben angegebenen Werten kann im Bereich der lokalen Erhöhung auch bei einer nicht volumengefärbten Glaskeramik oder einer Glaskeramik, bei welcher keine Farbänderung durch die erfindungsgemäße Behandlung auftritt, vorhanden sein.

Unter der integralen Lichttransmission wird die über einen Wellenlängenbereich, wie etwa den sichtbaren Spektralbereich zwischen 380 und 780 Nanometern Wellenlänge gemittelte spektrale Lichttransmission verstanden. Die spektrale Lichttransmission ist die Lichttransmission bei einer bestimmten Wellenlänge. Sofern nicht von der spektralen Lichttransmission gesprochen wird, ist mit dem Begriff der Lichttransmission im Sinne dieser Beschreibung eine integrale Lichttransmission zu verstehen.

Die Höhe der Transmissionsänderung kann additiv zum ursprünglichen Transmissionsgrad um absolut 0,1% bis um mehr als absolut 50% höher sein. Vorzugsweise wird, insbesondere bei dunkel gefärbten Glaskeramiken, die Transmission im sichtbaren 20 Spektralbereich im ersten Bereich gegenüber dem zweiten, benachbarten Bereich 16 um mindestens einen Faktor 2 erhöht. Bei dem in Fig. 4 gezeigten Beispiel steigt die Transmission im Bereich der lokalen Erhöhung um mehr als einen Faktor drei gegenüber dem nicht aufgehellten, zur Erhöhung 20 benachbarten Bereich 16 an.

Ein weiteres Merkmal dieser Ausführungsform der Erfindung ist die Tatsache, dass die Wellenlänge der Einstrahlung nicht der Wellenlänge des erzielten Effektes, also der Wellenlänge, bei welcher die Transmissionsänderung auftritt, entsprechen muss. Bei der vorliegenden Erfindung ist es also möglich, beispielsweise im infraroten Wellenlängenbereich bei 1 μm Wellenlänge einzustrahlen, weil in der Glaskeramik in diesem Wellenlängenbereich eine Absorptionsbande vorhanden ist. Der resultierende Effekt kann aber beispielsweise im sichtbaren Bereich zwischen 380nm und 780nm liegen und eine Änderung der Transmission bei einer oder mehreren Wellenlängen in diesem Bereich durch physikalisch-chemische Reaktionen der im Glas vorhandenen Elemente und Verbindungen hervorrufen.

Beim Einbringen einer lokalen Erhöhung 20 und/oder einer Aufhellung im Falle einer volumengefärbten Glaskeramik ergeben sich im veränderten, beziehungsweise behandelten Bereich nur geringfügige strukturelle Änderungen.

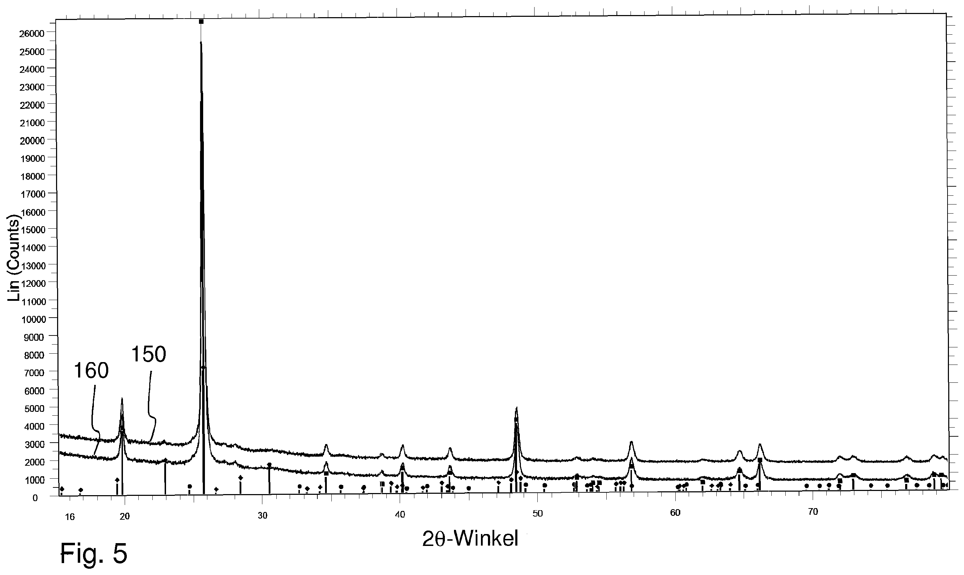

Fig. 5 zeigt dazu Röntgenbeugungsspektren an einem monolithischen Glaskeramikelement, wie es mit dem anhand von Fig. 1 erläuterten Verfahren erhalten wird. Bei der untersuchten Glaskeramik handelt es sich um eine mit Vanadiumoxid volumengefärbte Lithium-Aluminosilikat-Glaskeramik, wie sie für Kochflächen eingesetzt wird. Mit der Röntgenbeugung wurden die Kristallphasen, der Kristallphasengehalt und die Kristallitgröße eines durch die Laserbestrahlung aufgehellten Bereichs 15 verglichen mit benachbarten, nicht aufgehellten Bereichen 16. Zusätzlich mit einer Raute, einem Quadrat oder einem Kreis eingezeichnet sind die relativen Intensitäten verschiedener Kristallphasen. Mit den Quadraten sind dabei Röntgenbeugungs-Peaks von Hochquarz-Mischkristall (HQMK), mit Rauten die Röntgenbeugungs-Peaks von Lithium-Aluminosilikat, beziehungsweise Keatit-Mischkristall (KMK, 10 LiAlSi$_3$O$_8$) und mit Kreisen die Röntgenbeugungs-Peaks des ebenfalls in der Glaskeramik nachgewiesenen Zirkontitanats (ZrTiO$_4$) gekennzeichnet. Die Kurve 150 ist dabei das Röntgenbeugungsspektrum am aufgehellten, also erfindungsgemäß behandelten Bereich und die Kurve 160 das Röntgenbeugungsspektrum eines benachbarten, unveränderten Bereichs 16. Wie ersichtlich ist, sind die Kurven praktisch deckungsgleich, bis auf den aus Darstellungsgründen unterschiedlichen Offset. Bei genauerer Auswertung der Intensitäten der Röntgenbeugungspeaks ergibt sich als einziges ein sehr geringer Anstieg des Gehalts der Keatit-Mischkristallphase. Die Ergebnisse sind in der nachstehenden Tabelle nochmals zusammengefasst:

| Probe | Kristallitgröße [nm] [+/- 5%] | | HQMK-Phasen-gehalt [+/- 10%] | | KMK-Phasengehalt [+/- 10%] | |
|---|---|---|---|---|---|---|
| | HQMK | KMK | unkorrigiert | korrigiert | unkorrigiert | korrigiert |
| aufgehellter Bereich | 49 | Nicht bestimmbar | 54 | 66 | 3 | 3 |
| unveränderter Bereich | 48 | Nicht bestimmbar | 55 | 67 | 1 | 1 |

Für die Absorptionskorrekturen in den mit "korrigiert" bezeichneten Spalten wurde die chemische Zusammensetzung der Glaskeramik und eine angenommene Dichte von $\rho$=2.5g/cm$^3$ verwendet.

Der Phasengehalt des Hochquarz-Mischkristalls ändert sich nach obiger Tabelle und Fig. 5 demnach nicht innerhalb des Messfehlers. Nur der Keatit-Mischkristall-Gehalt zeigt eine Änderung, die sich aufgrund des geringen Anteils dieser Kristallphase nicht nennenswert auf das Gefüge der Glaskeramik auswirkt. Auch wenn behandelte und nicht behandelte Bereiche eines Glaskeramikelements damit also keine wesentlichen strukturellen Unterschiede aufweisen, kann ein erfindungsgemäß behandelter Bereich einer Aluminosilikat-Glaskeramik, insbesondere einer Lithium-Aluminosilikat-Glaskeramik gemäß einer Weiterbildung an einem höheren Gehalt an Keatit-Mischkristall gegenüber einem benachbarten, nicht behandelten Bereich erkannt werden.

Änderungen der Kristallphasen und/oder deren Anteile können die Lichtstreuung beeinflussen. Verändert sich die Lichtstreuung im Material, führt dies auch zu einer veränderten Remission beim Beleuchten des behandelten Bereiches. Wie an dem obigen Beispiel demonstriert, sind behandelte und unbehandelte Bereiche in ihrer Morphologie, insbesondere in Bezug auf die vorhandenen Kristallphasen praktisch identisch. Daher ändert sich auch die Remission bei einem erfindungsgemäßen Erzeugnis zwischen einem behandelten und einem unbehandelten Bereich nicht oder allenfalls sehr geringfügig. In Weiterbildung der Erfindung ist daher ohne Beschränkung auf das vorstehend erläuterte Ausführungsbeispiel vorgesehen, dass sich die Remission des ersten Bereichs für sichtbares Licht von der Remission des zweiten Bereichs um höchstens absolut 20 %, vorzugsweise um höchstens absolut 10 %, besonders bevorzugt um höchstens absolut 5 % unterscheidet. Auch die Lichtstreuung steigt im ersten Bereich, wenn überhaupt, dann allenfalls geringfügig um weniger als absolut 5% an. Wie oben bereits ausgeführt, wird die Zusammensetzung der Glaskeramik vorzugsweise allgemein so gewählt, dass der kristalline Anteil, beziehungsweise der Kristallphasengehalt gegenüber dem Anteil der Restglasphase überwiegt. Gemäß einer Ausführungsform der Erfindung liegt dabei der Anteil von Hochquarz-Mischkristall bei höchstens 70 Gewichtsprozent, vorzugsweise zwischen 60 und 70 Gewichtsprozent.

Eine Glaskeramik mit diesen Eigenschaften lässt sich mit folgender Zusammensetzung in Gew.-% auf Oxidbasis herstellen:

| | |
|---|---|
| $Li_2O$ | 3,0-4,2 |
| $Na_2O + K_2O$ | 0,2-1,5 |
| MgO | 0-1,5 |
| CaO + SrO + BaO | 0-4 |
| ZnO | 0-2 |
| $B_2O_3$ | 0-2 |
| $Al_2O_3$ | 19-23 |
| $SiO_2$ | 60-69 |
| $TiO_2$ | 2,5-4 |
| $ZrO_2$ | 0,5-2 |
| $P_2O_5$ | 0-3 |
| $SnO_2$ | 0,1 - < 0,6 |
| $V_2O_5$ | 0,01-0,06 |
| $Fe_2O_3$ | 0,03-0,2 |

Vorzugsweise gelten noch eine oder beide der folgenden Nebenbedingungen: 1 < Fe2O3/V205 < 8, sowie

TiO$_2$ + ZrO$_2$ + SnO$_2$: 3,8-6.

Die Röntgenbeugungsmessungen wurden an einer Probe vorgenommen, bei der nur eine Aufhellung ohne Volumenänderung vorgenommen wurde. Bei dem erfindungsgemäßen Verfahren mit lokaler Verformung ist aufgrund der stärkeren Erwärmung von einer deutlicheren Zunahme des Keatit-Phasengehalts auszugehen. Bei einer Probe, bei welcher eine deutlich hervortretende lokale Erhöhung erzeugt wurde, kann auch visuell eine leichte Zunahme der Streuung im Bereich der Erhöhung beobachtet werden. Da die Lichtstreuung im Allgemeinen durch Keatit-Mischkristalle hervorgerufen wird, ist gemäß einer Ausführungsform der Erfindung ein höherer Anteil an Keatit-Mischkristall im Glaskeramik-Material in und unterhalb der Erhöhung 20 bei LAS-Glaskeramiken ein Merkmal eines erfindungsgemäß hergestellten Glaskeramik-Artikels. Gemäß dieser Weiterbildung der Erfindung ist also ein Glaskeramikartikel aus Aluminosilikat-Glaskeramik, vorzugsweise aus Lithium-Aluminosilikat-Glaskeramik vorgesehen, bei welchem das Glaskeramik-Material an der lokalen Erhöhung 20 einen höheren Gehalt an Keatit-Mischkristall aufweist, als ein zur lokalen Erhöhung benachbarter zweiter Bereich 16.

Bei der Ausführungsform mit durch Vanadiumoxid volumengefärbter Glaskeramik und einer gleichzeitig mit der lokalen Erhöhung erzielten Transmissionssteigerung ergibt sich als besonders vorteilhafter Effekt auch eine bis in den blauen Spektralbereich reichende Anhebung der Transmission. Dies ermöglicht es, den aufgehellten Bereich auch für blau leuchtende, durch die Glaskeramik hindurch strahlende optische Anzeigen nutzen zu können.

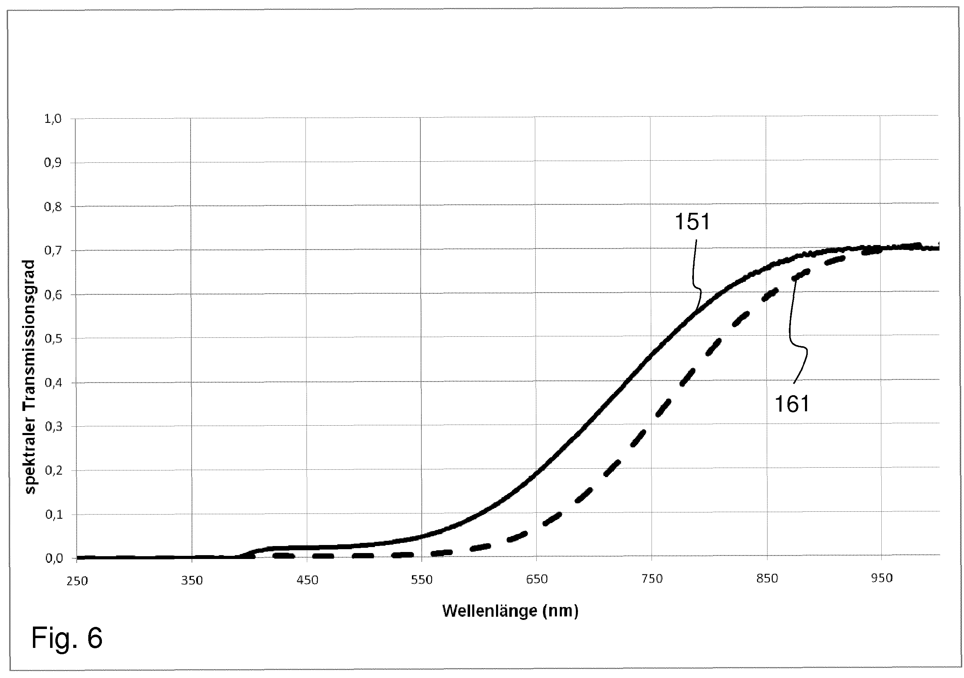

Fig. 6 zeigt dazu die spektralen Transmissionsgrade einer erfindungsgemäß behandelten, mit Vanadiumoxid volumengefärbten, 4 mm dicken Glaskeramik-Platte als Funktion der Wellenlänge. Die Kurve 151 in Fig. 6 bezeichnet dabei den spektralen Transmissionsgrad eines mit einem Laser behandelten Bereichs, Kurve 161 den spektralen Transmissionsgrad eines benachbarten, unbehandelten Bereichs 16. Anhand der beiden Kurven wird ersichtlich, dass die spektrale Transmission im gesamten Spektralbereich zwischen 420 Nanometern und 780 Nanometern im behandelten Bereich 15 deutlich erhöht ist. Dies ist von Vorteil, wenn weniger der Farbton beeinflusst, sondern die Durchsicht verbessert werden soll, um etwa gezielt Bereiche des Glaskeramik-Kochfelds für leuchtende oder auch nicht leuchtende Anzeigeelemente durchsichtiger zu machen oder allgemein Fenster, insbesondere Sichtfenster einzufügen. Gemäß einer Weiterbildung der Erfindung und ohne

Beschränkung auf das spezielle Ausführungsbeispiel ist im ersten Bereich daher die spektrale Transmission innerhalb des gesamten Spektralbereichs zwischen 420 Nanometern und 780 Nanometern höher als in einem benachbarten, zweiten Bereich.

Bemerkenswert am spektralen Transmissionsgrad gemäß Fig. 6 ist außerdem noch, dass die Transmission im blauen und grünen Spektralbereich relativ gesehen noch stärker ansteigt, als im roten Bereich. So steigt die Transmission bei 500 Nanometern von 0,0028 auf 0,027, also um einen Faktor von mehr als neun an. Bei 600 Nanometern ist der Faktor geringer und liegt hier bei 4,7. Gerade dies ist besonders günstig, um bei volumengefärbten, insbesondere mit Vanadiumoxid gefärbten Glaskeramiken die Anzeigefähigkeit für blaue und/oder grüne Anzeigeelemente oder für Farbdisplays zu verbessern. Gemäß noch einer Weiterbildung der Erfindung ist daher das Verhältnis der spektralen Transmissionsgrade von behandeltem zu benachbartem, unbehandelten Bereich bei einer Wellenlänge im Bereich von 400 bis 500 Nanometern größer als bei einer Wellenlänge im Bereich von 600 bis 800 Nanometern.

Die spektrale Transmission wurde an einer Probe gemessen, bei welcher nur eine Aufhellung, jedoch keine Erhöhung erzeugt wurde. Da die Aufhellung in gleichem oder sogar in stärkerem Maße beim erfindungsgemäßen Erzeugen einer erhabenen Struktur oder Erhöhung durch lokaler Einwirkung elektromagnetischer Strahlung und Erwärmung über die Glastemperatur erfolgt, gilt das Ausführungsbeispiel gemäß Fig. 6 auch für einen erfindungsgemäßen Glaskeramikartikel. Nachfolgend sind die Farben, gemessen an den behandelten und unbehandelten Bereichen 15, 16 in Durchleuchtung der 4 mm dicken Glaskeramik-Platte für verschiedene Farbmodelle (xyY, Lab, Luv) und verschiedene Normlichtquellen aufgelistet:

|  |  | Normlichtart A | |
|---|---|---|---|
|  |  | Bereich 16 | Bereich 15 |
|  | X | 0,6307 | 0,5782 |
|  | Y | 0,3480 | 0,3805 |
|  | Y | 1,7 | 7,6 |

|  |  | Normlichtart D65 | |
|---|---|---|---|
|  |  | Bereich 16 | Bereich 15 |
|  | X | 0,5550 | 0,4773 |
|  | Y | 0,3540 | 0,3752 |
|  | Y | 1,2 | 6,2 |

(fortgesetzt)

|     | Bereich 16 | Bereich 15 |
| --- | --- | --- |
| Ra  | -25,6 | 22,0 |

Normlichtart C

|     | Bereich 16 | Bereich 15 |
| --- | --- | --- |
| X   | 0,5545 | 0,4763 |
| Y   | 0,3495 | 0,3685 |
| Y   | 1,2 | 6,3 |
| Yellowness I. | 174,0 | 120,8 |

Normlichtart A

|     | Bereich 16 | Bereich 15 |
| --- | --- | --- |
| L*  | 13,6 | 33,2 |
| a*  | 23,2 | 24,2 |
| b*  | 19,1 | 27,7 |
| C*  | 30,0 | 36,8 |

Normlichtart D65

|     | Bereich 16 | Bereich 15 |
| --- | --- | --- |
| L*  | 10,6 | 30,0 |
| a*  | 20,8 | 20,2 |
| b*  | 13,8 | 22,9 |
| C*  | 25,0 | 30,5 |

Normlichtart C

|     | Bereich 16 | Bereich 15 |
| --- | --- | --- |
| L*  | 10,8 | 30,2 |
| a*  | 20,1 | 19,2 |
| b*  | 14,1 | 23,2 |
| C*  | 24,5 | 30,1 |

Normlichtart A

|     | Bereich 16 | Bereich 15 |
| --- | --- | --- |
| L*  | 13,6 | 33,2 |
| u*  | 30,3 | 45,3 |
| v*  | 0,9 | 4,3 |

Normlichtart D65

|     | Bereich 16 | Bereich 15 |
| --- | --- | --- |
| L*  | 10,6 | 30,0 |
| u*  | 22,6 | 36,6 |
| v*  | 7, 0 | 18,5 |

|      | Normlichtart C |            |
| ---- | -------------- | ---------- |
|      | Bereich 16     | Bereich 15 |
| L*   | 10,8           | 30,2       |
| u*   | 22,9           | 36,7       |
| v*   | 7, 8           | 20,3       |

Bei den Farbmodellen Lab, xyY und Luv bezeichnen die Parameter L, beziehungsweise Y jeweils die Helligkeit. Der Parameter Y im xyY-Farbmodell korrespondiert dabei bei der Verwendung der Normlichtart C oder Normlichtart D65 zur Transmission $\tau_{vis}$ im sichtbaren Spektralbereich und aus dem Vergleich der Y-Werte kann die Transmissionssteigerung ermittelt werden. Anhand der oben angegebenen Werte zeigt sich, dass die Transmission im sichtbaren Spektralbereich um mindestens einen Faktor 2,5 angehoben wird. Generell ist hierbei zu beachten, dass die Transmission auch vom Brechwert und der Dicke der durchleuchteten Glaskeramik-Kochfläche abhängt. Generell kann aber gesagt werden, dass gemäß einer Weiterbildung der Erfindung die Transmission im sichtbaren Spektralbereich zwischen 380 und 780 Nanometern bezogen auf eine Dicke von 4 Millimetern um mindestens einen Faktor 2,5 angehoben wird.

Die Einfärbung durch Vanadiumoxid, $V_2O_5$, wie sie auch bei den vorstehend besprochenen Ausführungsbeispielen der Fig. 4 und 6 vorlag, ist auch aus der DE 10 2008 050 263 B4 bekannt. Demnach stellt sich der Färbemechanismus als ein komplexer Prozess dar. Für die Überführung des Vanadiumoxids in den färbenden Zustand ist nach dieser Druckschrift ein Redoxvorgang Voraussetzung. Im kristallisierbaren Ausgangsglas färbt das $V_2O_5$ noch relativ schwach und führt zu einem leicht grünlichen Farbton. Bei der Keramisierung findet der Redoxvorgang statt, das Vanadium wird reduziert und der Redoxpartner wird oxidiert.

Als primärer Redoxpartner fungiert das Läutermittel, was sich aus Mössbauer-Untersuchungen an Sb- und Sn-geläuterten Zusammensetzungen ergibt. Beim Keramisieren wird ein Teil des $Sb^{3+}$ bzw. $Sn^{2+}$ im Ausgangsglas in die höhere Oxidationsstufe $Sb^{5+}$ bzw. $Sn^{4+}$ überführt. Es wurde angenommen, dass das Vanadium in reduzierter Oxidationsstufe als $V^{4+}$ oder $V^{3+}$ in den Keimkristall eingebaut wird und dort durch Elektronen-Charge-Transfer-Reaktionen intensiv färbt. Als weiterer Redoxpartner kann auch $TiO_2$ die Einfärbung durch Vanadiumoxid verstärken. Neben der Art und Menge der Redoxpartner im Ausgangsglas hat nach der DE 10 2008 050 263 B4 auch der Redoxzustand, welcher im Glas bei der Schmelze eingestellt wird einen Einfluss. Ein niedriger Sauerstoff-Partialdruck, also eine reduzierend eingestellte Schmelze, z. B. durch hohe Schmelztemperaturen, verstärkt die Farbwirkung des Vanadiumoxids.

Es ist aber auch möglich, dass das reduzierte $V^{4+}$ oder $V^{3+}$ nicht oder nicht ausschließlich in die Keimkristalle, sondern möglicherweise auch in eine andere strukturelle Umgebung, etwa in den Hochquarz-Mischkristall oder in Cluster eingebaut wird.

Mit der Erfindung wird nun diese Einfärbung lokal durch die Einstrahlung hochenergetischer Strahlung und Erwärmung der Glaskeramik verändert.

Dies kann mit der Beeinflussung des farbgebenden Charge-Transfer-Prozesses in Verbindung gebracht werden. Da der hypothetische Elektronentransfer zwischen Donator- und Akzeptorzentren beim Charge Transfer für die Absorption maßgeblich ist, ist anzunehmen dass durch die einwirkende hochenergetische Strahlung und Aufheizung hier eine strukturelle Änderung an den Zentren erfolgt. Diese strukturelle Änderung vermindert die Häufigkeit/Wahrscheinlichkeit der Elektronentransfer-Übergänge und damit die Absorption.

Wegen der Sensibilität, mit der die Vanadin-Einfärbung auf Sauerstoff-Partialdruck und Redoxprozesse bei der Keramisierung reagiert, können hierfür konkurrierende Wertigkeitswechsel in Frage kommen. Das heißt, die Strahlung in Verbindung mit der Erwärmung kann Elektronen von den Donator- oder Akzeptorzentren möglicherweise entfernen und diese damit für den Charge Transfer Prozess passivieren.

Die Beobachtung dass sich die verminderte Einfärbung durch thermische Behandlung wieder rückgängig machen lässt unterstützt die Hypothese. Die thermodynamisch stabilere strukturelle Situation der Zentren lässt sich wiederherstellen. Damit wird die Häufigkeit der farbgebenden Charge-Transfer-Übergänge wieder erhöht.

Fig. 7 zeigt ein optisch vermessenes Höhenprofil der Erhöhung 20, an welcher auch das in Fig. 4 gezeigte Transmissionsprofil gemessen wurde. Bei der Darstellung ist zu beachten, dass die Maßstäbe auf der Abszisse und der Ordinate stark unterschiedlich gewählt wurden, um die Form der lokalen Erhöhung zu verdeutlichen. Die Teilstriche auf der Ordinatenachse haben einen Abstand von etwa 16,5 $\mu$m. Deutlich zu erkennen ist auch die konkave Krümmung 24 am Rand der Erhöhung 20, die zur Mitte hin in eine konvexe Krümmung 25 übergeht.

Beim Vergleich der Fig. 4 und Fig. 7 ergibt sich, dass die Halbwertsbreite des Transmissionsprofils größer ist, als die Halbwertsbreite der Erhöhung 20. Dies liegt daran, dass die Aufhellung oder allgemeiner die Farbänderung der volumengefärbten Glaskeramik bereits bei niedrigeren Temperaturen erfolgt, als die Ausbildung der Erhöhung. Dadurch kann eine Aufhellung aufgrund des Temperaturfelds bei der Einstrahlung auch noch dort auftreten, wo keine Volumenänderung mehr erfolgt. In Weiterbildung der Erfindung, ohne Beschränkung auf das spezielle, in den Fig. 4 und Fig. 7 gezeigte Ausführungsbeispiel ist demgemäß die Halbwertsbreite des Transmissionsprofils der integralen Lichttransmission im Bereich der lokalen Erhebung 20 größer als die Halbwertsbreite der lokalen Erhebung 20 selbst.

Die Höhe der lokalen Erhebung 20 liegt weiterhin im Bereich von 0,025 bis 0,8 Millimetern, vorzugsweise bis 0,3 Millimetern. Im Speziellen liegt die Höhe bei dem in Fig. 7 gezeigten Beispiel bei etwa 100 Mikrometern. Erhebungen dieser Höhe sind haptisch gut erfassbar, was bei zu kleinen Höhen nicht mehr gegeben ist. Andererseits führen zu große Höhen über 0,3 Millimetern aufgrund der Volumenänderung zu Spannungen im Material, welche die Festigkeit des Glaskeramikartikels negativ beeinflussen können. Besonders bevorzugt wird eine Höhe der Erhebung 20 im Bereich von 50 $\mu$m bis 150 $\mu$m.Insbesondere bei punktförmigen Erhöhungen können aber auch die genannten 0,8 Millimeter ohne erhebliche Festigkeitsverluste erzeugt werden. Wird die Erhöhung in ein Glaselement 2 eingefügt, welches danach keramisiert wird, werden vorhandenen Spannungen während der Keramisierung ohnehin abgebaut. Damit können auch die genannten 0,8 Millimeter Höhe der Erhöhung ohne weiteres erreicht werden.

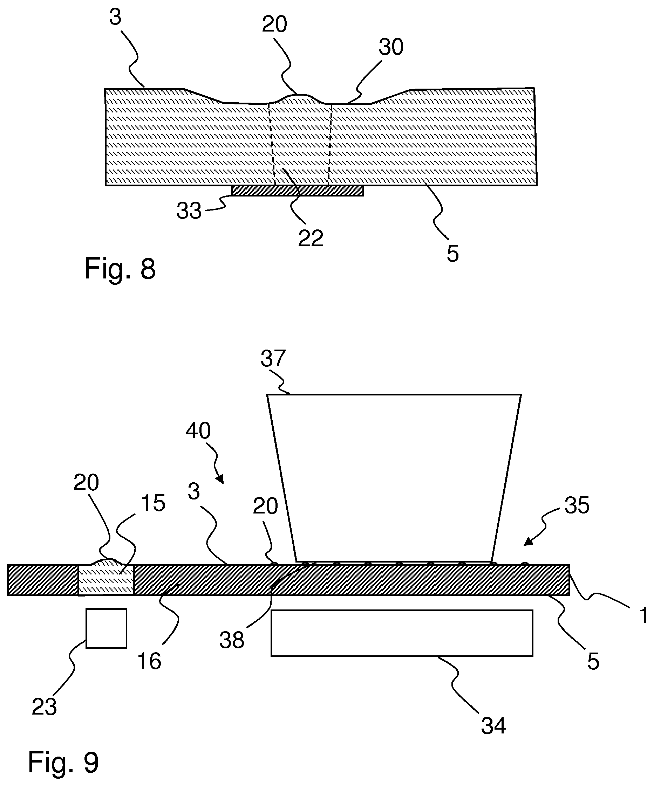

Fig. 8 zeigt eine Variante der in Fig. 2 dargestellten Ausführungsform. Bei dieser Variante ist in der Oberfläche auf der Seite 3 eine Vertiefung 30 in das Glas- oder Glaskeramikelement eingebracht. In dieser Vertiefung wurde dann mit dem erfindungsgemäßen Verfahren eine lokale Erhöhung 20 erzeugt. Die Vertiefung kann beispielsweise vor der Keramisierung durch Heißformung oder auch durch einen abrasiven Prozess vor oder nach der Keramisierung erzeugt werden. Eine bevorzugte Anwendung sind Bedienelemente, insbesondere auf einem Glaskeramik-Kochfeld, die durch eine Vertiefung 30 markiert sind. Solche vertieften oder konkaven Bedienelemente werden eingesetzt, um das Bedienelement, beziehungsweise dessen Position haptisch erfassbar zu machen. Mit der lokalen Erhöhung kann eine zusätzliche haptische Struktur erzeugt werden. Insbesondere kann eine solche lokale Erhöhung auch eine Bedruckung ersetzen, welche die Funktion des Bedienelements kennzeichnet. Hier bietet sich der Vorteil, dass die dann insbesondere in Form eines Symbols eingebrachte lokale Erhöhung 20 haltbarer gegen Abrieb ist, verglichen mit einer Bedruckung. Bevorzugt wird ein Berührungsschalter für das Bedienelement verwendet. Hierzu kann unter der Vertiefung beispielsweise ein geeigneter Sensor 33 angeordnet sein, welcher eine Berührung der Glaskeramik in der Vertiefung durch Einlegen eines Fingers erfasst. Geeignet ist beispielsweise ein kapazitiver Sensor. Auch auf der Oberfläche in der Vertiefung 30 könnte ein geeigneter Sensor angeordnet sein, um einen Berührungsschalter zu schaffen.

Fig. 9 zeigt als Anwendung der Erfindung ein Glaskeramik-Kochfeld 40 mit einer Glaskeramikplatte 1 welche zumindest eine erfindungsgemäß hergestellte lokale Erhöhung 20 aufweist. Gemäß einer Ausführungsform der Erfindung wird ausgenutzt, dass bei volumengefärbten Glaskeramiken gleichzeitig mit dem Einbringen der Erhöhung 20 eine Transmissionssteigerung erzielt werden kann. Damit können Anzeigeelemente, insbesondere selbstleuchtende Anzeigeelemente unter der Glaskeramikplatte 1 sichtbar gemacht werden. Demgemäß ist in einer Ausführungsform der Erfindung also vorgesehen, dass die Glaskeramikplatte 1 mit färbenden Metallionen volumengefärbt ist, wobei sich im Bereich der lokalen Erhebung, beziehungsweise Erhöhung 20 die Färbung der Glaskeramik von einem zweiten Bereich 16 neben der lokalen Erhöhung 20 unterscheidet, so dass der Absorptionskoeffizient im Bereich der lokalen Erhöhung 20 kleiner als der Absorptionskoeffizient des zweiten Bereichs 16 und damit die integrale Lichttransmission im sichtbaren Spektralbereich an der lokalen Erhöhung 20 höher ist, als die integrale Lichttransmission des zweiten Bereichs 16. Unter dem ersten Bereich 15 ist eine vorzugsweise selbstleuchtende Anzeigeeinrichtung 23 angeordnet, deren Licht durch den ersten Bereich 15 hindurch sichtbar ist.

Gemäß einer anderen Ausführungsform wird die Erhöhung 20 vor dem Keramisieren erzeugt. Die Aufhellung im Bereich der Erhöhung wird dann durch einen zweiten Temperaturbehandlungsschritt erzeugt, mit welchem die oben genannte Entfärbung erzielt wird.

Eine solche Anzeige kann insbesondere auch mit einem Bedienelement gemäß Fig. 8 kombiniert werden, so dass selbstleuchtende Berührungsschalter mit haptisch erfassbaren lokalen Erhöhungen 20 geschaffen werden.

Die lokalen Erhöhungen 20 können in besonders vorteilhafter Weise auch verwendet werden, um die Wärmeleitung zwischen einem Gargefäß 37 und der Oberfläche der Glaskeramik zu reduzieren. Dies ist beispielsweise dann günstig, wenn als Heizelement 34 ein Induktionsheizelement verwendet wird. In diesem Fall wird das Gargefäß heißer als die Glaskeramikplatte. Demgemäß ist in Weiterbildung der Erfindung vorgesehen, dass das Glaskeramik-Kochfeld 40 eine Kochzone 35 mit lokalen Erhöhungen 20 aufweist, so dass durch die lokalen Erhöhungen 20 die Kontaktfläche eines auf der Kochzone aufgestellten Gargefäßes 37 erniedrigt und zwischen dem Boden des Gargefäßes 37 und der Oberfläche der Glaskeramikplatte 1 ein Luftspalt 38 geschaffen wird.

Die erfindungsgemäß hergestellten erhabenen Strukturen, beziehungsweise lokalen Erhöhungen 20 weisen im Allgemeinen eine besondere und vorteilhafte Form auf, die bei dem in Fig. 7 gezeigten Beispiel aufgrund der etwas ungenauen Messung und des kleinen Messausschnitts nur ansatzweise zu erkennen ist.

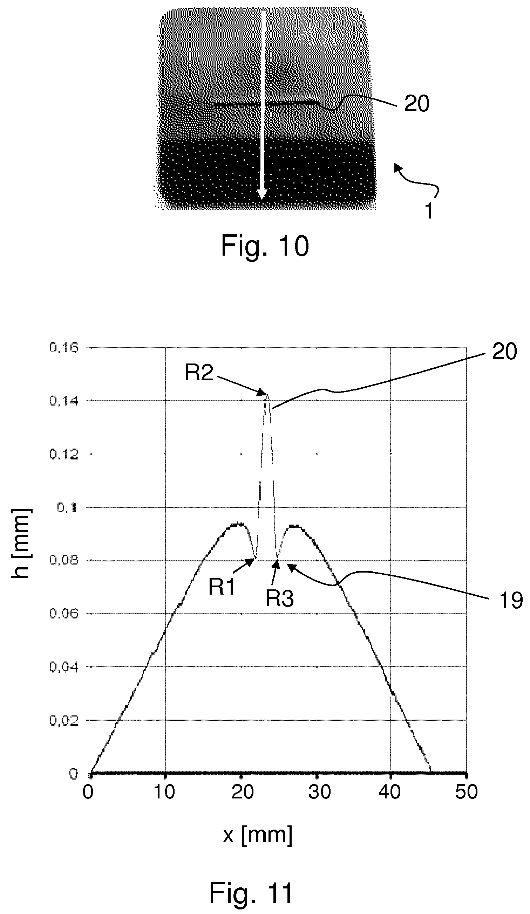

Fig. 10 zeigt dazu eine fotografische Aufnahme eines erfindungsgemäßen Glaskeramikelements 1 mit einer lokalen Erhöhung 20, hier in Form einer geradlinigen linienförmigen Erhöhung.

In Fig. 11 ist ein Konturscan der Oberfläche, beziehungsweise ein Oberflächenprofil gezeigt, welches entlang des in Fig. 10 gezeigten Pfeils mittels eines Messtasters gemessen wurde. Die gesamte Messstrecke betrug 45 mm. Die Glaskeramikprobe zeigt eine leichte Wölbung, so dass die gemessenen Höhenwerte des Oberflächenprofils der Fig. 11 zur Mitte der Probe hin ansteigen. Der Konturscan wurde mit einem Tastschnittgerät mit einer Tastspitze gemessen.

Wie anhand des Oberflächenprofils deutlich zu erkennen ist, geht die Erhöhung 20 in einen vertieften Rand 19 über. Ohne Beschränkung auf das spezielle dargestellte Beispiel ist gemäß einem weiteren Aspekt der Erfindung ein Glaskeramikartikel 1 vorgesehen, bei welchem in der Oberfläche zumindest eine lokale Erhebung 20 vorhanden ist, wobei die kleinste laterale Abmessung eine Länge von zumindest 0,05 mm aufweist, und wobei die lokale Erhebung eine Höhe im Bereich von 0,025 bis 0,8 Millimetern aufweist, wobei die Erhebung und das umgebende Glaskeramikmaterial monolithisch sind und die gleiche Zusammensetzung aufweisen, und wobei die Erhebung 20 von einem vertieften Rand 19 umgeben ist. Mit anderen Worten geht die Erhöhung 20 in einen gegenüber der Oberfläche des Glaskeramikelements vertieften Graben über. Die Volumina des vertieften Rands 19 und der Erhöhung 20 können sich dabei weiterhin auch nahezu oder vollständig ausgleichen. Ohne Beschränkung auf das Ausführungsbeispiel ist daher gemäß einer Ausführungsform der Erfindung vorgesehen, dass sich die Volumina von lokaler Erhöhung 20 und vertieftem Rand 19 um höchstens einen Faktor 2, vorzugsweise um höchstens einen Faktor 1,5 unterscheiden.

In Summe ist daher keine oder nur eine geringe Volumenzunahme und damit einhergehend auch keine oder nur eine geringe Abnahme der Dichte im Bereich der Erhöhung 20 notwendig. Damit sind auch die mechanischen Spannungen nur gering. Dies gilt insbesondere dann, wenn die Verformung in Form einer lokalen Erhöhung 20 in ein Glaselement eingefügt und das Glaselement dann keramisiert wird. Beim Keramisieren können sich verbleibende mechanische Spannungen vollständig oder zumindest nahezu vollständig abbauen. Gemäß einer bevorzugten Ausführungsform der Erfindung weist daher das Glaskeramikelement 1 im Bereich der lokalen Erhöhung 20 mechanische Spannungen von betragsmäßig weniger als 15 MPa, vorzugsweise weniger als 10 MPa auf.

Die Begriffe "Erhöhung", beziehungsweise synonym dazu "Erhebung", sowie "Vertiefung", so, wie diese in dieser Beschreibung verwendet werden, beziehen sich jeweils auf das Niveau der die Erhöhung oder Vertiefung ungebenden Oberfläche des Glas- oder Glaskeramikelements.

Weiterhin sind, wie anhand von Fig. 11 ebenfalls erkennbar ist, auch die minimalen Krümmungsradien der Vertiefung und der Erhöhung typischerweise ähnlich. Weiterhin ist aber gemäß einer Weiterbildung der Erfindung der minimale Krümmungsradius der Erhöhung 20 größer als der minimale Krümmungsradius der Vertiefung 19.

Gemäß einer Weiterbildung der Erfindung unterscheiden sich der minimale Krümmungsradius der Erhöhung 20 und der minimale Krümmungsradius der konkaven Krümmung der Vertiefung 19 höchstens um einen Faktor 3,5, vorzugsweise höchstens um einen Faktor 2,5. Insbesondere sind dabei der minimale Krümmungsradius der Erhöhung 20 an einer konvexen Krümmung und der minimale Krümmungsradius der Vertiefung 19 an einer konkaven Krümmung der Oberfläche positioniert. Typische minimale Krümmungsradien erfindungsgemäß erzeugter Erhöhungen 20 liegen dabei zwischen 0,5 und 10 Millimetern, vorzugsweise zwischen 1,5 Millimetern und 8 Millimetern.

In Fig. 11 sind als Beispiel die lateralen Positionen mit den beiden minimalen Krümmungsradien R1, R3 der Gräben des vertieften Rands 19 und des minimalen Krümmungsradius R2 der Erhöhung 20 angegeben.

Allgemein können die lokalen Krümmungsradien mit einer 3-Punkte-Methode aus den Messwerten eines Konturscans bestimmt werden. Dazu werden Vektoren

$$(1) \qquad \vec{a} = \overrightarrow{BC} = \begin{pmatrix} C_x - B_x \\ C_y - B_y \\ C_z - B_z \end{pmatrix},$$

$$\vec{b} = \overrightarrow{CA} = \begin{pmatrix} A_x - C_x \\ A_y - C_y \\ A_z - C_z \end{pmatrix},$$

$$\vec{c} = \overrightarrow{AB} = \begin{pmatrix} B_x - A_x \\ B_y - A_y \\ B_z - A_z \end{pmatrix}$$

bestimmt, welche Verbindungsvektoren zwischen drei Punkten A, B, C der Kontur, beziehungsweise des Oberflächenprofils darstellen. In der vorstehenden dargestellten Schreibweise weisen die Konturpunkte A, B, C jeweils drei Koordinaten auf. Das Verfahren kann aber auf einen zweidimensionalen Konturscan, wie ihn Fig. 11 als Beispiel zeigt, ebenso angewendet werden, beispielsweise indem die z-Koordinaten $A_z$, $B_z$, $C_z$ gleich null gesetzt werden.

Mit den Vektoren nach den Gleichungen (1) können dann die Größen

$$(2) \qquad s = \frac{1}{2} * \left( |\vec{a}| + |\vec{b}| + |\vec{c}| \right)$$

und

$$( 3 ) \quad A = \sqrt{s * (s - |\vec{a}|) * (s - |\vec{b}|) * (s - |\vec{c}|)}$$

aus den Beträgen der Vektoren gebildet werden. Der Krümmungsradius ergibt sich dann als Radius eines Kreises durch die Punkte A, B, C zu

$$( 4 ) \quad r = \frac{(|\vec{a}| * |\vec{b}| * |\vec{c}|)}{4A}.$$

Um einen genaueren Wert für den Krümmungsradius zu erhalten, kann auch über die Krümmungsradien zu mehreren Tripeln verschiedener Punkte A, B, C gemittelt werden.

Für das in Fig. 11 gezeigte Beispiel ergeben sich nun für die Krümmungsradien

R1= 6,47 mm,

R2= 11,58 mm und

R3= 6,18 mm.

Der minimale Krümmungsradius R2 der Erhöhung 20 ist zwar größer, als die minimalen Krümmungsradien der Gräben, beziehungsweise des vertieften Rands 19, allerdings liegen alle Radien in derselben Größenordnung und der Unterschied zwischen den Radien ist kleiner als ein Faktor 2.

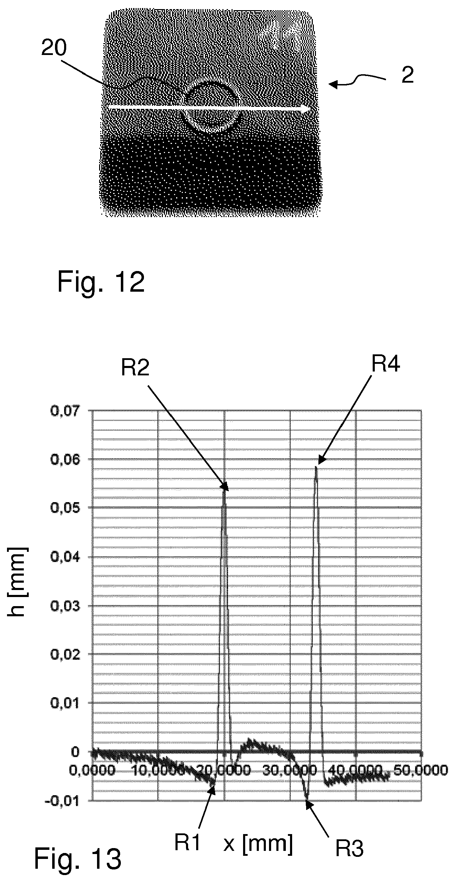

Fig. 12 und Fig. 13 zeigen ein weiteres Beispiel einer erfindungsgemäßen Erhöhung 20, welche über einen vertieften Rand 19, beziehungsweise eine grabenförmige Vertiefung in die umgebende Oberfläche übergeht. Bei diesem Beispiel wurde die Oberfläche eines Glaselements 2 mit einer ringförmigen Erhöhung 20 verformt. Das Glaselement 2 kann anschließend keramisiert werden, um ein Glaskeramikelement zu erhalten. Fig. 13 zeigt entsprechend zu Fig. 11 einen Konturscan entlang einer Strecke, die durch den Mittelpunkt der kreisringförmigen Erhöhung 20 verläuft. Die Strecke ist in der fotografischen Aufnahme der Fig. 12 als Pfeil dargestellt. Der Konturscan verläuft an zur Mitte der kreisringförmigen Erhöhung gegenüberliegenden Punkten zweimal über die Erhöhung 20. Dementsprechend zeigt der Konturscan zwei Maxima. Mit der oben erläuterten Methode wurden wieder die minimalen Krümmungsradien des vertieften Rands (Radien R1, R3) und der Erhöhung 20 (Radien R2, R4) aus dem Konturscan ermittelt. Für die Radien ergibt sich in diesem Beispiel:

R1 =8,8 mm,

R2 = 6,1 mm,

R3 = 6,2 mm,

R4 = 5,7mm.

Die minimalen Krümmungsradien des vertieften Rands 19 und der Erhöhung 20 unterscheiden sich hier also demnach nur wenig. Nach den gemessenen Werten ist der Unterschied kleiner als einen Faktor 1,5.

Bei beiden Ausführungsbeispielen ist die Erhöhung 20 linienförmig ausgebildet, nämlich einmal in Form einer geraden Linie und einmal ringförmig als Kreislinie. Generell werden linienförmige Erhöhungen 20 besonders bevorzugt, um beispielsweise Bedienelemente oder allgemeiner Zonen auf einem Glaskeramikelement zu kennzeichnen. Beispielsweise könnte bei einem Glaskeramik-Kochfeld wie bei dem in Fig. 9 gezeigten Beispiel ein Display-Element oder auch ein Sensor, insbesondere ein Sensor für einen Bedienfeld-Schalter angeordnet sein. Die erfindungsgemäße Erhöhung 20 wirkt hier zudem auch als Wärmeisolierung. Ein Kontakt beispielsweise eines heißen Gargefäßes mit dem Glaskeramikmaterial im Bereich des Sensors oder Displays wird vermieden, so dass sich die Glaskeramik langsamer aufheizt. Damit wird eine Anzeigeeinrichtung 23 oder auch ein Sensor vor Überhitzung geschützt und der so isolierte Bereich bleibt kühl genug, um mit den Fingern berührt zu werden.

Der vertiefte Rand 19 bringt besondere Vorteile mit sich. Die Höhendifferenz zwischen dem tiefsten Punkt des vertieften Rands 19 und dem höchsten Punkt der Erhöhung 20 ist um die Tiefe des Rands größer. Damit wird die Erhöhung 20 haptisch und optisch deutlicher erfassbar als eine gleich hohe, von einer ebenen Fläche aus ansteigende Erhöhung. Weiterhin wird auch die Gefahr von Beschädigungen der Erhöhung, beispielsweise durch ein über ein Kochfeld gerutschtes Gargefäß vermieden.

Wie anhand der Beispiele ersichtlich, weist der vertiefte Rand 19 typischerweise eine weitere, für die optische und haptische Erfassbarkeit besonders vorteilhafte Eigenschaft auf. Der vertiefte Rand 19 fällt nämlich von ebenen Oberflächenbereichen in Richtung auf die Erhöhung 20 zu zunächst sanft ab, um dann ausgehend vom tiefsten Punkt steiler in die Erhöhung 20 überzugehen. Die unterschiedliche Steilheit der Flanken des vertieften Rands 10 führt auch dazu, dass der tiefste Punkt des vertieften Rands in Richtung zur Erhöhung hin versetzt angeordnet ist. Mit anderen Worten weist in Weiterbildung der Erfindung der vertiefte Rand 19 bezüglich dessen tiefstem Punkt einen asymmetrischen Querschnitt auf, wobei die mittlere Steigung ausgehend vom tiefsten Punkt zur Erhöhung 20 hin betragsmäßig größer ist, als vom tiefsten Punkt ausgehend weg von der Erhöhung 20. Anders ausgedrückt weist der vertiefte Rand 19 ausgehend vom tiefsten Punkt zwei Flanken auf, wobei die zur Erhöhung gerichtete Flanke steiler als die andere Flanke ist. Im Allgemeinen ist der tiefste Punkt auch der Punkt mit dem minimalen Krümmungsradius oder der Punkt mit dem minimalen Krümmungsradius liegt zumindest nahe am tiefsten Punkt. Auch diese Form führt zu einer verbesserten Sichtbarkeit und Fühlbarkeit, da der Abfall der Oberfläche zum tiefsten Punkt sanft und damit weniger auffällig erfolgt, damit aber die Erhöhung um so deutlicher fühlbar und sichtbar ist.

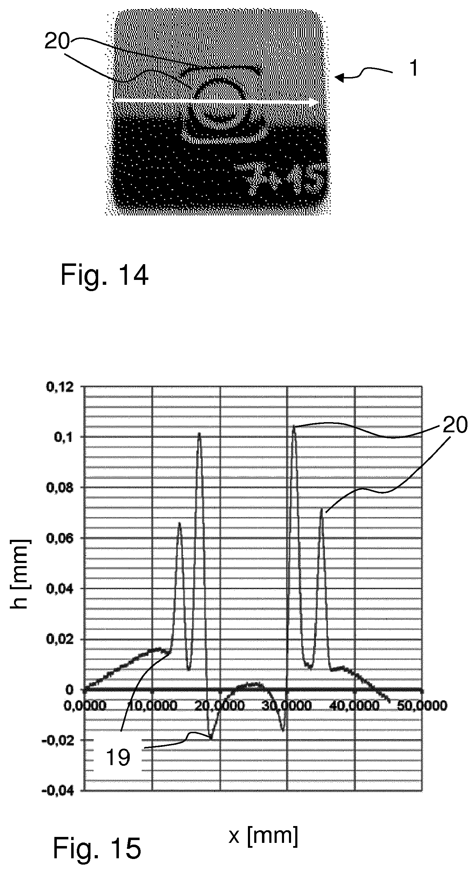

Mit der Erfindung lassen sich bezüglich des Verlaufs entlang der Oberfläche nahezu beliebige Formen von Erhöhungen 20 erzeugen. In den Fig. 14 und 15 ist dazu ein weiteres Beispiel gezeigt. Bei ringförmigen Erhöhungen können diese wie bei dem gezeigten Beispiel auch ineinandergeschachtelt sein. Bei dem Beispiel ist in eine äußere ringförmige Erhöhung 20 mit quadratischem oder allgemeiner eckigem Umfang eine kreisringförmige innere Erhöhung 20 in einem Glaselement erzeugt und das Glaselement dann zu einem Glaskeramikelement 1 keramisiert worden. Wie auch bei dem gezeigten Beispiel können bei ineinandergeschachtelten ringförmigen Erhöhungen 20 die einzelnen Ringe unterschiedliche Höhen aufweisen. Günstig ist es, wenn, wie es auch das Beispiel zeigt, die Höhe zur Mitte hin ansteigt, beziehungsweise, wenn innere Ringe eine größere Höhe als äußere Ringe aufweisen. Dies erleichtert beispielsweise bei einem Glaskeramik-Kochfeld das Hinweggleiten eines Gargefäßes über die Verformung.

Wird zur Aufheizung zum Erzeugen der Erhöhung elektromagnetische Strahlung, vorzugsweise Laserlicht verwendet, welche das Glas oder die Glaskeramik durchdringt, so kommt es zu einer Aufheizung des gesamten Volumens zwischen Ein- und Austrittsstelle. Dies gilt umso mehr, wenn eine die Strahlung reflektierende Unterlage verwendet wird. Auf diese Weise lassen sich in einem plattenförmigen Glas- oder Glaskeramikelement gegenüberliegende Erhöhungen 20 herstellen, da beide gegenüberliegenden Oberflächen aufgeheizt werden.

Fig. 16 zeigt dazu schematisch ein entsprechendes plattenförmiges Glaskeramikelement 1 mit gegenüberliegenden Erhöhungen 20 auf den beiden Seiten 3, 5.

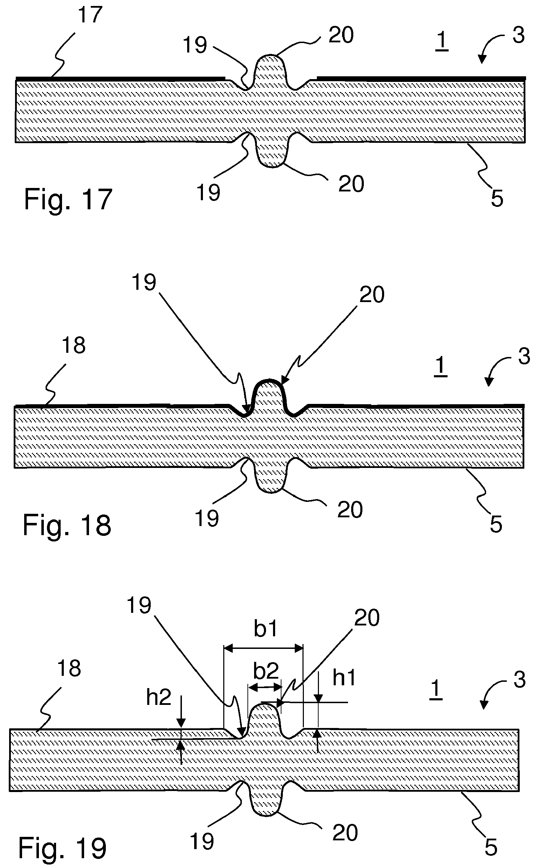

In Fig. 17 ist schematisch das in Fig. 16 dargestellte plattenförmige Glaskeramikelement 1 mit gegenüberliegenden Erhöhungen 20 auf den beiden Seiten 3, 5 gezeigt, wobei die eine Seite 3 mit einer Schicht 17 versehen ist. Durch die Ausbildung der erzeugten Erhebung 20, welche durch sanfte Radienübergänge, eine geringe absolute Höhe der Erhebung und eine geringe laterale Ausdehnung gekennzeichnet ist, kann mit einem Rakel gearbeitet werden, welches über die Erhebungen geführt wird. Dadurch ist es möglich, mittels Siebdruckverfahren, welches besonders kostengünstig ist, eine Schicht 17 auf das Glaskeramikelement 1 nach der Erzeugung der Erhebung 20 aufzubringen. Ein Schichtauftrag kann auf diese Weise bis nahe an die beginnende Umformung heran erfolgen. Somit können besonders vorteilhaft Standard-Dekorierungsverfahren wie der Siebdruck verwendet werden, um eine Schicht 17, die insbesondere auch eine Dekorschicht sein kann, aufzutragen.

Auf diese Weise lassen sich Schichten, insbesondere Dekorschichten, also Schichten zum Erzeugen bestimmter visueller Eindrücke, oder auch Funktionsschichten, etwa Kratzschutzschichten oder Antihaftschichten, auf das Glaskeramikelement 1 nach erfindungsgemäßer Erzeugung der Erhebungen aufbringen. Ein nachträgliches Aufbringen der Schicht hat den Vorteil, dass keine Gefährdung der Schicht durch die Erzeugung der Erhebung gegeben ist. Auf diese Weise können auch sehr empfindliche Schichten aufgetragen werden.

In Fig. 18 ist schematisch ein weiteres Ausführungsbeispiel eines plattenförmigen Glaskeramikelements 1 mit gegenüberliegenden Erhöhungen 20 auf den beiden Seiten 3, 5 gezeigt, wobei die eine Seite 3 mit einer Schicht 18 versehen ist. Die auf der Seite 3 aufgebrachte Schicht umfasst bei diesem Beispiel auch den Bereich der Erhebung 20 sowie den Bereich des vertieften Rands 19. Die Ausbildung der Erhebung ermöglicht ein Überdrucken von Rand und Erhebung, so dass die Seite 3 vollumfänglich mit einer Schicht versehen werden kann. Auf diese Weise konnten Dekorstrukturen oder Vollflächendrucke bis zu einer Dicke von etwa 0,1 mm sehr gut auf dem Glaskeramikelement erzeugt werden, nachdem dieses mit der gewünschten Erhebung versehen worden war.

Die Seite 3 ist vorzugsweise die Nutzseite des Glaskeramikelements 1.

Anstelle eines Aufbringens der Schicht nach dem Erzeugen der Erhebung kann eine Schicht auch schon vor diesem Prozessschritt aufgebracht sein. In anderen Worten, es ist auch möglich, ein zumindest teilweise bereits beschichtetes Glaskeramikelement 1 mit einer erfindungsgemäßen Erhebung auszustatten. Hier ist darauf zu achten, dass die Wärmeeinflusszone frei von der Schicht oder Beschichtung ist, da es aufgrund der Wärmeeinwirkung zu Schädigungen der Schicht kommen kann. Da erfindungsgemäß die Wärmeeinflusszone sehr schmal gehalten werden kann, sind vorteilhaft nur entsprechend schmale Bereiche auf der Oberfläche des Glaskeramikelements 1 von der Schicht auszunehmen. Im Allgemeinen entspricht die Ausdehnung der Wärmeeinflusszone demjenigen Bereich, der mit der elektromagnetischen Strahlung beaufschlagt wird, demnach also einem punktförmig ausgebildeten Bereich auf der Oberfläche des Glaselements oder Glaskeramikelements.

Der Abstand der Schicht von dem Laserspot richtet sich im Allgemeinen nach der Temperaturbelastbarkeit der Schicht, wobei darauf zu achten ist, dass die Schicht nicht überhitzt. Hierbei ist nicht nur die Vorwärmtemperatur des Glases oder der Glaskeramik zu beachten, sondern auch die durch Wärmeleitung erhöhte Temperatur im Nahbereich des direkt erhitzten Umformbereiches. Im Falle von Dekorbeschichtungen, beispielsweise keramischen Dekorfarben, welche vor der Umformung aufgebracht sind, so sind diese eher unkritisch und können Temperaturen von bis zu 900°C aushalten. Sind dagegen auch andere Schichten vorhanden, etwa Kratzschutzschichten, unterseitige Schichten zur Streulichtabdeckung, Antireflex-, Spiegel- oder IR-reflektierende Schichten, so sind diese häufig weniger temperaturbelastbar. Demnach ist hier größere Vorsicht geboten und der Abstand entsprechend größer zu wählen.

Die Erhebungen 20 können punkt- oder linienförmig ausgebildet sein. Die Abmessungen der Erhöhungen 20 können bei punktförmigen Erhebungen Durchmesser ab 0,05 mm, vorzugsweise 0,5 mm bis 3 mm erreichen, sowie bei linienförmigen Erhebungen Linienbreiten ab 0,05 mm, vorzugsweise 0,5 mm bis 3 mm und beliebige Linienlängen erreichen.

Fig. 19 schließlich zeigt schematisch eine Ausführungsform mit einer Erhebung mit günstigen Dimensionen der Breite und Höhe der Erhebung, welche vorteilhafte geometrische Verhältnisse für einen weichen geometrischen Verlauf der Erhebung zeigen.

Als besonders günstig hat sich herausgestellt, wenn das Verhältnis der Höhe $h_1$ einer Erhebung zur Gesamt- breite $b_1$, welche die Breite der Erhebung $b_2$ und die Breite von möglichen Vertiefungen um die Erhebung umfasst, in einem Bereich von kleiner als 0,2, bevorzugt von kleiner als 0,1 liegt. Ferner ist es günstig, wenn das Verhältnis der Tiefe $h_2$ einer die Erhebung umgebenden Vertiefung zur Höhe $h_1$ der Erhebung weniger als 0,5 beträgt. Schließlich ist es vorteilhaft, wenn das Verhältnis der Breite der Erhebung $b_2$ zu der Gesamtbreite $b_1$ zwischen 0,1 und 1 liegt. Demnach sind folgende Verhältnisse günstig:

$$- \quad h_1/b_1 < 0{,}2, \text{ besonders günstig } h_1/b_1 < 0{,}1$$

$$- \quad h_2/h_1 < 0{,}5$$

$$- \quad 1 > b_2/b_1 > 0{,}1.$$

Die Höhe und die Tiefe werden dabei jeweils ausgehend von der jeweiligen Oberfläche des Glases oder Glaskeramikelements aus gemessen. Die Breite $b_1$ ist dabei abhängig vom Durchmesser des Laserspots. Demnach richten sich günstige geometrische Verhältnisse für die Ausbildung eines weichen geometrischen Verlaufs mit sanften Radienübergängen nach der Größe des Laserpunktes auf der Oberfläche des Glases oder Glaskeramikelements.

Auf diese Weise können Glaskeramikartikel erzeugt werden, welche sowohl eine Schicht als auch lokale Erhebungen auf derselben Oberfläche umfassen. Hierdurch können bestimmte Bereiche auf der Oberfläche des Glaskeramikartikels, etwa bei einer Verwendung als Kochfeld, beispielsweise Bedienbereiche oder Kochzonen, sowohl haptisch als auch visuell wahrnehmbar gestaltet werden.

Bezugszeichenliste

| 1 | Glaskeramikelement |
| 2 | Glaselement |
| 3, 5 | Seite von 1, 2 |
| 7 | Siliziumoxid-Keramikunterlage |
| 8 | Heizquelle |
| 9 | Laserquelle |
| 11 | Faser |
| 13 | Laser-Scanner |
| 15 | aufgehellter Bereich |
| 16 | zu 15 benachbarter, nicht aufgehellter Bereich |
| 17 | Schicht |
| 18 | Schicht |
| 19 | vertiefter Rand, Graben |
| 20 | lokale Erhöhung, Erhebung |

| 22 | Bereich mit erniedrigter Dichte |
|---|---|
| 23 | Anzeigeeinrichtung |
| 24 | konkave Krümmung |
| 25 | konvexe Krümmung |
| 30 | Vertiefung |
| 33 | Sensor |
| 34 | Heizelement |
| 35 | Kochzone |
| 37 | Gargefäß |
| 38 | Luftspalt |
| 40 | Glaskeramik-Kochfeld |
| 90 | Laserstrahl |
| 130 | fokussierende Optik |
| 151 | spektraler Transmissionsgrad eines mit einem Laser behandelten Bereichs 15 von 1, |
| 161 | spektraler Transmissionsgrad eines benachbarten, unbehandelten Bereichs 16 von 1. |

**Patentansprüche**

1. Verfahren zur Erzeugung eines zumindest teilweise beschichteten Glaskeramikelements (1) mit erhabener Struktur, bei welchem ein Glaselement (2) oder ein Glaskeramikelement (1) mit elektromagnetischer Strahlung in einem lokalen Bereich der Oberfläche bestrahlt wird, wobei die Strahlung das Glaselement (2) oder Glaskeramikelement (1) durchdringt und dabei zumindest teilweise absorbiert wird, so dass das Glaselement (2) oder Glaskeramikelement (1) sich im Bereich der eingestrahlten elektromagnetischen Strahlung erhitzt und über die Glasübergangstemperatur hinaus erwärmt wird, und wobei die Einstrahlung nach der Erwärmung beendet wird, so dass der erhitzte Bereich wieder auf die Temperatur des umgebenden Glas- oder Glaskeramikmaterials auskühlt, und wobei durch die Erwärmung eine Volumenänderung des Glases oder der Glaskeramik erfolgt, welche eine lokale Erhebung der Oberfläche bewirkt, und wobei dieser Zustand beim Abkühlen des erhitzten Bereichs eingefroren wird, so dass nach dem Abkühlen eine Oberflächenverformung in Form einer Erhöhung (20) bestehen bleibt, wobei im Falle eines Glaselements (2) das Glaselement (2) nach dem Erzeugen der Erhöhung (20) durch eine Temperaturbehandlung keramisiert und damit in ein Glaskeramikelement (1) umgewandelt wird.

2. Verfahren gemäß vorstehendem Anspruch 1, **dadurch gekennzeichnet, dass** das Glaselement (2) oder das Glaskeramikelement (1) bereits vor der Erzeugung der lokalen Erhebung zumindest teilweise eine Schicht auf der Oberfläche umfasst.

3. Verfahren gemäß einem der vorstehenden Ansprüche, **dadurch gekennzeichnet, dass** die elektromagnetische Strahlung auf einen punktförmigen Bereich mit einem Durchmesser, der kleiner ist als die zweifache Dicke, vorzugsweise kleiner als die Dicke des Glaselements (2) oder des Glaskeramikelements (1) konzentriert wird.

4. Verfahren gemäß dem vorstehenden Anspruch, **dadurch gekennzeichnet dass** der punktförmige Bereich über die Oberfläche des Glaselements (2) oder Glaskeramikelements (1) bewegt wird, um eine linienförmige Erhebung mit einer Fläche größer als die Fläche des punktförmigen Bereiches zu erzeugen.

5. Verfahren gemäß einem der vorstehenden Ansprüche, **dadurch gekennzeichnet, dass** die elektromagnetische Strahlung mit einer mittleren Leistungsdichte von zumindest 2,5 W/mm$^2$ auf den zu erwärmenden Bereich des Glaselements (2) oder Glaskeramikelements (1) eingestrahlt wird.

6. Verfahren gemäß einem der vorstehenden Ansprüche, **dadurch gekennzeichnet, dass** die Erwärmung mit einem Infrarotlaser als Strahlungsquelle durchgeführt wird.

7. Verfahren gemäß einem der vorstehenden Ansprüche, **dadurch gekennzeichnet, dass** die Erwärmung mit einem Temperaturanstieg von zumindest 20 K pro Sekunde erfolgt.

8. Verfahren gemäß einem der vorstehenden Ansprüche, **dadurch gekennzeichnet, dass** das Glas oder die Glaskeramik nach der Aufheizung mit einer Abkühlrate von mindestens 1 K pro Sekunde, vorzugsweise zumindest 5 K pro Sekunde, besonders bevorzugt zumindest 10 K pro Sekunde zumindest innerhalb eines Temperaturbereichs von der Maximaltemperatur bis 100 K unterhalb der Maximaltemperatur abgekühlt wird.

**9.** Glaskeramikartikel (1), umfassend eine Schicht auf zumindest einer Oberfläche, bei welchem in der Oberfläche zumindest eine lokale Erhebung (20) vorhanden ist, wobei die kleinste laterale Abmessung eine Länge von zumindest 0,05 mm aufweist, und wobei die lokale Erhebung eine Höhe im Bereich von 0,5% bis 20% der Glasdicke aufweist, wobei die Erhebung und das umgebende Glaskeramikmaterial monolithisch sind und die gleiche Zusammensetzung aufweisen.

**10.** Glaskeramikartikel (1), vorzugsweise gemäß dem vorstehenden Anspruch, bei welchem in der Oberfläche zumindest eine lokale Erhebung (20) vorhanden ist, wobei die kleinste laterale Abmessung eine Länge von zumindest 0,05 mm aufweist, und wobei die lokale Erhebung eine Höhe im Bereich von 0,5% bis 20% der Glasdicke aufweist, wobei die Erhebung (20) und das umgebende Glaskeramikmaterial monolithisch sind und die gleiche Zusammensetzung aufweisen, und wobei die Erhebung (20) von einem vertieften Rand (19) umgeben ist.

**11.** Glaskeramikartikel gemäß dem vorstehenden Anspruch, **gekennzeichnet durch** zumindest eines der folgenden Merkmale:

- der minimale Krümmungsradius der Erhebung (20) und der minimale Krümmungsradius der Vertiefung (19) unterscheiden sich höchstens um einen Faktor 3,5, vorzugsweise höchstens um einen Faktor 2,5.
- der minimale Krümmungsradius der Erhöhung (20) liegt zwischen 0,5 und 10 Millimetern, vorzugsweise zwischen 1,5 Millimetern und 8 Millimetern.

**12.** Glaskeramikartikel gemäß einem der Ansprüche 9 bis 11, **dadurch gekennzeichnet, dass** das Glaskeramikmaterial Hochquarzmischkristall als Hauptkristallphase aufweist, wobei das Glaskeramikmaterial in der Erhebung einen höheren Anteil von Keatit-Mischkristall aufweist, verglichen mit die Erhebung umgebenden Bereichen der Glaskeramik.

**13.** Glaskeramikartikel gemäß einem der Ansprüche 9 bis 12, wobei die Glaskeramik des Glaskeramikartikels mit färbenden Metallionen volumengefärbt ist, wobei sich im Bereich der lokalen Erhebung die Färbung der Glaskeramik von einem zweiten Bereich (16) neben der lokalen Erhöhung (20) unterscheidet, so dass der Absorptionskoeffizient im Bereich der lokalen Erhöhung (20) kleiner als der Absorptionskoeffizient des zweiten Bereichs (16) und damit die integrale Lichttransmission im sichtbaren Spektralbereich an der lokalen Erhöhung (20) höher ist, als die integrale Lichttransmission des zweiten Bereichs (16).

**14.** Glaskeramikartikel gemäß einem der vorstehenden Ansprüche 9 bis 13, aus Aluminosilikat-Glaskeramik, vorzugsweise aus Lithium-Aluminosilikat-Glaskeramik, bei welchem das Glaskeramik-Material an der lokalen Erhöhung (20) einen höheren Gehalt an Keatit-Mischkristall aufweist, als ein zur lokalen Erhöhung benachbarter zweiter Bereich (16).

**15.** Glaskeramik-Kochfeld (40) mit einem Glaskeramikartikel gemäß einem der vorstehenden Ansprüche 9 bis 14 in Form einer Glaskeramikplatte.

**16.** Glaskeramik-Kochfeld (40) gemäß dem vorstehenden Anspruch, **gekennzeichnet durch** eine Kochzone (35) mit lokalen Erhöhungen (20), so dass **durch** die lokalen Erhöhungen (20) die Kontaktfläche eines auf der Kochzone aufgestellten Gargefäßes (37) erniedrigt und zwischen dem Boden des Gargefäßes (37) und der Oberfläche der Glaskeramikplatte (1) ein Luftspalt (38) geschaffen wird.

Fig. 1

Fig. 2

Fig. 16

Fig. 3

Fig. 4

Fig. 7

Fig. 5

Fig. 6

Fig. 8

Fig. 9

Fig. 10

Fig. 11

Fig. 12

Fig. 13

Fig. 14

Fig. 15

Fig. 17

Fig. 18

Fig. 19

Europäisches
Patentamt

European
Patent Office

Office européen
des brevets

**EUROPÄISCHER RECHERCHENBERICHT**

Nummer der Anmeldung

EP 16 16 2174

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | DE 696 35 850 T2 (OHARA SAGAMIHARA KK [JP]) 5. Oktober 2006 (2006-10-05) <br> * Anspruch 13 * <br> * Absatz [0002] - Absatz [0003] * <br> ----- | 1-5,7-15 | INV. <br> C03C3/083 <br> C03C10/00 <br> C03C23/00 <br> B23K26/00 |
| X | US 5 861 196 A (KUO DAVID [US] ET AL) 19. Januar 1999 (1999-01-19) <br><br> * Anspruch 13 * <br> * Spalte 1 * <br> ----- | 1,3,5, 7-9, 11-15 | |
| X | US 2001/008715 A1 (LIN LI-JU [US] ET AL) 19. Juli 2001 (2001-07-19) <br><br> * Anspruch 1 * <br> * Absatz [0005] - Absatz [0007] * <br> ----- | 1,3,5, 7-9, 11-15 | |
| X | US 2011/100058 A1 (DICKINSON JR JAMES EDWARD [US] ET AL) 5. Mai 2011 (2011-05-05) <br> * Ansprüche 1,10 * <br> ----- | 1,3,5-9, 11-16 | |
| X | US 2007/201797 A1 (GRZYBOWSKI RICHARD R [US] ET AL) 30. August 2007 (2007-08-30) <br> * Ansprüche 1,3 * <br> ----- | 1,3,5-9, 11-16 | RECHERCHIERTE SACHGEBIETE (IPC) <br> C03C <br> B23K |

| | | |
|---|---|---|
| Der vorliegende Recherchenbericht wurde für alle Patentansprüche erstellt | | |
| Recherchenort <br> München | Abschlußdatum der Recherche <br> 16. Juni 2016 | Prüfer <br> Saldamli, Saltuk |

KATEGORIE DER GENANNTEN DOKUMENTE

X : von besonderer Bedeutung allein betrachtet
Y : von besonderer Bedeutung in Verbindung mit einer
    anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
    nach dem Anmeldedatum veröffentlicht worden ist
D : in der Anmeldung angeführtes Dokument
L : aus anderen Gründen angeführtes Dokument

................................................................

& : Mitglied der gleichen Patentfamilie, übereinstimmendes
    Dokument

EPO FORM 1503 03.82 (P04C03)

# EP 3 072 857 A1

## ANHANG ZUM EUROPÄISCHEN RECHERCHENBERICHT
## ÜBER DIE EUROPÄISCHE PATENTANMELDUNG NR.

EP 16 16 2174

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

16-06-2016

| Im Recherchenbericht angeführtes Patentdokument | | Datum der Veröffentlichung | Mitglied(er) der Patentfamilie | | Datum der Veröffentlichung |
|---|---|---|---|---|---|
| DE 69635850 | T2 | 05-10-2006 | DE | 69635850 T2 | 05-10-2006 |
| | | | EP | 0810586 A1 | 03-12-1997 |
| US 5861196 | A | 19-01-1999 | KEINE | | |
| US 2001008715 | A1 | 19-07-2001 | KEINE | | |
| US 2011100058 | A1 | 05-05-2011 | KEINE | | |
| US 2007201797 | A1 | 30-08-2007 | EP | 2008137 A2 | 31-12-2008 |
| | | | JP | 4971370 B2 | 11-07-2012 |
| | | | JP | 2009528572 A | 06-08-2009 |
| | | | US | 2007201797 A1 | 30-08-2007 |
| | | | WO | 2007100858 A2 | 07-09-2007 |

Für nähere Einzelheiten zu diesem Anhang : siehe Amtsblatt des Europäischen Patentamts, Nr.12/82

EPO FORM P0461

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2012134818 A
- DE 102004050263 B4

- DE 102008050263 B4